(19) Europäisches Patentamt
European Patent Office
Office européen des brevets

(11) **EP 4 429 309 A1**

(12) **EUROPEAN PATENT APPLICATION**
published in accordance with Art. 153(4) EPC

(43) Date of publication:
**11.09.2024  Bulletin 2024/37**

(21) Application number: **22900664.8**

(22) Date of filing: **02.12.2022**

(51) International Patent Classification (IPC):
**H04W 24/02** (2009.01)    **G06N 3/08** (2023.01)

(52) Cooperative Patent Classification (CPC):
**G06N 3/0464; G06N 3/08; G06N 3/084; H04W 16/18; H04W 24/02**

(86) International application number:
**PCT/CN2022/136138**

(87) International publication number:
**WO 2023/098860 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.12.2021  CN 202111462667**

(71) Applicant: **Huawei Technologies Co., Ltd.
Shenzhen, Guangdong 518129 (CN)**

(72) Inventors:
• **SUN, Yan**
  **Shenzhen, Guangdong 518129 (CN)**
• **CHAI, Xiaomeng**
  **Shenzhen, Guangdong 518129 (CN)**
• **SUN, Yaqi**
  **Shenzhen, Guangdong 518129 (CN)**
• **QIU, Yuheng**
  **Shenzhen, Guangdong 518129 (CN)**
• **WU, Yiqun**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND COMMUNICATION APPARATUS**

(57)    The present disclosure provides a communication method and a communication apparatus. The method includes: The communication apparatus receives first information, where the first information indicates a training policy of a first intelligent model. The communication apparatus performs model training on the first intelligent model according to the training policy. In this way, an intelligent model that meets a communication performance requirement can be obtained while air interface resource overheads are reduced.

FIG. 4

## Description

This application claims priority to Chinese Patent Application No. 202111462667.X, filed with the China National Intellectual Property Administration on December 2, 2021 and entitled "COMMUNICATION METHOD AND COMMUNICATION APPARATUS", which is incorporated herein by reference in its entirety.

## TECHNICAL FIELD

The present disclosure relates to the communication field, and more specifically, to a communication method and a communication apparatus.

## BACKGROUND

In a wireless communication network, for example, in a mobile communication network, services supported by the network are increasingly diversified, and therefore requirements that need to be met are increasingly diversified. For example, the network needs to be able to support ultra-high speeds, ultra-low latencies, and/or massive connections, and therefore network planning, network configuration, and/or resource scheduling are increasingly complex. In addition, because the network has increasingly powerful functions, for example, supports an increasingly high spectrum and supports new technologies such as a high-order multiple-input multiple-output (multiple-input multiple-output, MIMO) technology, beamforming, and/or beam management, energy saving of the network becomes a hot research topic. These new requirements, scenarios, and features bring unprecedented challenges to network planning, operation and maintenance, and efficient operation. To meet these challenges, an artificial intelligence technology may be introduced into the wireless communication network, to implement network intelligence. Based on this, how to effectively implement artificial intelligence in a network is an issue worth studying.

## SUMMARY

The present disclosure provides a communication method and a communication apparatus, to obtain an intelligent model that meets a communication performance requirement while reducing air interface resource overheads.

According to a first aspect, a communication method is provided. The method may be performed by a terminal or a module (for example, a chip) disposed (or used) in the terminal.

The method includes: receiving first information, where the first information indicates a training policy of a first intelligent model; and performing model training on the first intelligent model according to the training policy.

Based on the foregoing solution, a network may notify the terminal of a training policy of an intelligent model, and the terminal performs training on the intelligent model according to the training policy provided by the network. This reduces air interface resource overheads incurred when an access network node sends a model parameter (for example, a weight of each neuron, an activation function, and an offset) of the intelligent model to the terminal, so that a model obtained through training by the terminal can match a model used by the network, and meet a performance requirement of actual communication, while minimizing impact on transmission efficiency of service data.

With reference to the first aspect, in some implementations of the first aspect, the training policy includes one or more of the following:

a model training manner, loss function information, a model initialization manner, a model optimization algorithm type, or an optimization algorithm parameter.

Optionally, the model training manner may be but is not limited to one of supervised learning, unsupervised learning, or reinforcement learning.

Optionally, the loss function information may indicate a loss function used for training the first intelligent model, and the loss function may be but is not limited to a cross entropy loss function or a quadratic loss function. Alternatively, the loss function may be a machine learning intelligent model.

Optionally, the model initialization manner may be an initialization manner of a weight of each neuron of the first intelligent model. In an example, the first information may indicate that the model initialization manner is that an initial weight of each neuron is a random value in a preset range. Optionally, the first information includes a start value and an end value in the preset range. In another example, the first information may indicate that an initial weight of the neuron is 0. In still another example, the first information may indicate that an initial weight of the neuron is generated by using a preset function. In still another example, the first information may indicate identification information of one of a plurality of predefined initialization manners.

Optionally, the model optimization algorithm type may be an adaptive momentum estimation (adaptive momentum estimation, ADAM) algorithm, a stochastic gradient descent (stochastic gradient descent, SGD) algorithm, or a batch gradient descent (batch gradient descent, BGD) algorithm.

Optionally, the optimization algorithm parameter may include but is not limited to one or more of the following: a learning rate, a quantity of iterations, or an amount of data processed in batches.

With reference to the first aspect, in some implementations of the first aspect, the method further includes: obtaining second information, where the second information indicates a structure of the first intelligent model.

Based on the foregoing solution, the access network node notifies the terminal of the structure of the first intelligent model, and the terminal generates, based on an indication of the access network node, the initial first intelligent model having the structure, and trains the first intelligent model according to the indicated training policy, so that a first intelligent model obtained through training by the terminal can match a model used by a network device, and meet a performance requirement of the access network node. In this way, the first intelligent model can be used to improve wireless communication performance.

With reference to the first aspect, in some implementations of the first aspect, the second information specifically indicates one or more of the following structure information of the first intelligent model:
network layer structure information, a dimension of input data, or a dimension of output data.

Based on the foregoing solution, the access network node may notify, by using the second information, the terminal of one or more of the network layer structure information (for example, a quantity of neural network layers and a type of the neural network layer), the dimension of the input data, and the dimension of the output data. An information amount of the structure information is far less than an information amount of the weight of each neuron, the activation function, the offset, and the like in a neural network, so that resource usage can be reduced, and the terminal obtains, through training, the first intelligent model that meets a performance requirement.

With reference to the first aspect, in some implementations of the first aspect, the network layer structure information includes one or more of the following:
the quantity of neural network layers included in the first intelligent model, the type of the neural network layer, a manner of using the neural network layer, a cascading relationship between the neural network layers, a dimension of input data of the neural network layer, or a dimension of output data of the neural network layer.

With reference to the first aspect, in some implementations of the first aspect, the method further includes: receiving third information, where the third information indicates information about a training data set, and the training data set is used to train the first intelligent model.

Optionally, the training data set may include a training sample, or a training sample and a label.

Optionally, the information about the training data set may indicate a type of the training sample, or a type of the training sample and a type of the label. Optionally, the information about the training data set may indicate a use of the first intelligent model. Optionally, the third information may include the training data set.

Based on the foregoing solution, the access network node may further notify the terminal of the training data set used by the terminal to train the first intelligent model. In this way, the first intelligent model obtained through training by the terminal can be closer to a requirement of the access network node, in other words, better match the intelligent model of the access network node.

With reference to the first aspect, in some implementations of the first aspect, the method further includes: sending capability information, where the capability information indicates a capability to run an intelligent model.

Based on the foregoing solution, the terminal may indicate, to access network node by using the capability information, the capability of the terminal to run the intelligent model, so that the access network node may indicate, to the terminal based on the capability of the terminal, the training policy and/or the model structure meeting a capability requirement of the terminal.

With reference to the first aspect, in some implementations of the first aspect, the capability information specifically indicates one or more of the following capabilities: whether to support running of the intelligent model, a type of the intelligent model that can be run, a data processing, or a data storage capability.

With reference to the first aspect, in some implementations of the first aspect, the method further includes: receiving fourth information, where the fourth information indicates test information, and the test information is used to test performance of the first intelligent model.

Based on the foregoing solution, the access network node may further send the test information to the terminal, so that the terminal can test the first intelligent model based on the test information.

With reference to the first aspect, in some implementations of the first aspect, the test information includes one or more of the following:
test data information, a performance evaluation manner, or a performance evaluation parameter.

With reference to the first aspect, in some implementations of the first aspect, the method further includes: sending fifth information, where the fifth information indicates a test result of the first intelligent model.

Based on the foregoing solution, after testing the first intelligent model based on the test information, the terminal determines whether a trained first intelligent model meets the performance requirement, and notifies the access network node of the test result by using the fifth information.

With reference to the first aspect, in some implementations of the first aspect, the method further includes:

sending sixth information, where the sixth information indicates inference data, the inference data is obtained through inference based on test data by the first intelligent model, and the test information includes the test data.

Based on the foregoing solution, the terminal may infer the test data to obtain the inference data, and send the inference data to the access network node by using the sixth information, so that the access network node can determine, based on the inference data, whether the first intelligent model trained by the terminal meets the performance requirement.

With reference to the first aspect, in some implementations of the first aspect, the method further includes: receiving seventh information, where the seventh information indicates an updated training policy of the first intelligent model, and/or indicates an updated structure of the first intelligent model.

Based on the foregoing solution, if the access network node determines that the first intelligent model trained by the terminal does not meet the performance requirement, the access network node notifies, by using the seventh information, the terminal of the updated training policy and/or the updated model structure, and the terminal may train the first intelligent model again based on the seventh information.

With reference to the first aspect, in some implementations of the first aspect, the seventh information specifically indicates at least one variation of the training policy and/or at least one variation of the structure of the first intelligent model.

Based on the foregoing solution, the seventh information may specifically indicate the at least one variation of the training policy and/or the at least one variation of the model structure, so that information overheads can be reduced.

According to a second aspect, a communication method is provided. The method may be performed by an access network node or a module (for example, a chip) disposed (or used) in the access network node.

The method includes: sending first information, where the first information indicates a training policy of a first intelligent model.

The training policy is the same as the training policy described in the first aspect. For brevity, details are not described herein again.

With reference to the second aspect, in some implementations of the second aspect, the method further includes: sending second information, where the second information indicates a structure of the first intelligent model.

Structure information specifically indicated by the second information is the same as that described in the first aspect. For brevity, details are not described herein again.

With reference to the second aspect, in some implementations of the second aspect, the method further includes: sending third information, where the third information indicates information about a training data set, and the training data set is used to train the first intelligent model.

With reference to the second aspect, in some implementations of the second aspect, the method further includes: receiving capability information, where the capability information indicates a capability to run an intelligent model.

According to the method, the training policy and/or the structure of the first intelligent model may be determined based on the capability information.

A capability specifically indicated by the capability information is the same as that described in the first aspect. For brevity, details are not described herein again.

With reference to the second aspect, in some implementations of the second aspect, that the training policy and/or the structure of the first intelligent model is determined based on the capability information includes: The structure of the first intelligent model is determined based on the capability information; and/or the first intelligent model is trained according to the training policy.

With reference to the second aspect, in some implementations of the second aspect, the method further includes: sending fourth information, where the fourth information indicates test information for testing performance of the first intelligent model.

Content included in the test information is the same as that described in the first aspect. For brevity, details are not described herein again.

With reference to the second aspect, in some implementations of the second aspect, the method further includes:

receive fifth information, where the fifth information indicates a test result of the first intelligent model; and/or receiving sixth information, where the sixth information indicates inference data, the inference data is obtained through inference based on test data by the first intelligent model, and the test information includes the test data.

With reference to the second aspect, in some implementations of the second aspect, the seventh information specifically indicates at least one parameter variation of the training policy and/or at least one parameter variation of the structure of the first intelligent model.

According to a third aspect, a communication method is provided. The method may be performed by a terminal or a module (for example, a chip) disposed (or used) in the terminal. An example in which the method is performed by the terminal is used below for description.

The method includes: receiving second information, where the second information indicates a structure of a first intelligent model, and the second information includes one or more of the following structure information of the first intelligent model: network layer structure information, a dimension of input data, or a dimension of output data; determining the structure of the first intelligent model based on the second information; and performing model training on the first intelligent model.

The network layer structure information is the same as that described in the first aspect. For brevity, details are not described herein again.

With reference to the third aspect, in some implementations of the third aspect, the method further includes: obtaining first information, where the first information indicates a training policy of the first intelligent model; and the performing model training on the first intelligent model includes: performing model training on the first intelligent model according to the training policy.

The training policy is the same as that described in the first aspect. For brevity, details are not described herein again.

With reference to the third aspect, in some implementations of the third aspect, the method further includes: receiving third information, where the third information indicates information about a training data set, and the training data set is used to train the first intelligent model.

With reference to the third aspect, in some implementations of the third aspect, the method further includes: sending capability information, where the capability information indicates a capability to run an intelligent model.

The capability information is the same as that described in the first aspect. For brevity, details are not described herein again.

With reference to the third aspect, in some implementations of the third aspect, the method further includes: receiving fourth information, where the fourth information indicates test information, and the test information is used to test performance of the first intelligent model.

The test information is the same as that described in the first aspect. For brevity, details are not described herein again.

With reference to the third aspect, in some implementations of the third aspect, the method further includes: sending fifth information, where the fifth information indicates a test result of the first intelligent model; and/or sending sixth information, where the sixth information indicates inference data, the inference data is obtained through inference based on test data by the first intelligent model, and the test information includes the test data.

With reference to the third aspect, in some implementations of the third aspect, the method further includes: receiving seventh information, where the seventh information indicates an updated training policy of the first intelligent model, and/or indicates an updated structure of the first intelligent model.

With reference to the third aspect, in some implementations of the third aspect, the seventh information specifically indicates at least one variation of the training policy and/or at least one variation of the structure of the first intelligent model.

According to a fourth aspect, a communication method is provided. The method may be performed by an access network node or a module (for example, a chip) disposed (or used) in the access network node.

The method includes: sending second information, where the second information indicates a structure of a first intelligent model, and the second information includes one or more of the following structure information of the first intelligent model: network layer structure information, a dimension of input data, or a dimension of output data.

The network layer structure information is the same as that described in the first aspect. For brevity, details are not described herein again.

With reference to the fourth aspect, in some implementations of the fourth aspect, the method further includes: sending first information, where the first information indicates a training policy of the first intelligent model.

The training policy is the same as that described in the first aspect. For brevity, details are not described herein again.

With reference to the fourth aspect, in some implementations of the fourth aspect, the method further includes: sending third information, where the third information indicates information about a training data set, and the training data set is used to train the first intelligent model.

With reference to the fourth aspect, in some implementations of the fourth aspect, the method further includes: receiving capability information, where the capability information indicates a capability to run an intelligent model.

The capability information is the same as that described in the first aspect. For brevity, details are not described herein again.

With reference to the fourth aspect, in some implementations of the fourth aspect, the method further includes: sending fourth information, where the fourth information indicates test information, and the test information is used to test performance of the first intelligent model.

The test information is the same as that described in the first aspect. For brevity, details are not described herein again.

With reference to the fourth aspect, in some implementations of the fourth aspect, the method further includes: receiving fifth information, where the fifth information indicates a test result of the first intelligent model; and/or receiving sixth information, where the sixth information indicates inference data, the inference data is obtained through inference based on test data by the first intelligent model, and the test information includes the test data.

With reference to the fourth aspect, in some implementations of the fourth aspect, the method further includes: sending seventh information, where the seventh information indicates an updated training policy of the first intelligent model, and/or indicates an updated structure of the first intelligent model.

With reference to the fourth aspect, in some implementations of the fourth aspect, the seventh information specifically indicates at least one variation of the training policy and/or at least one variation of the structure of the first intelligent model.

According to a fifth aspect, a communication apparatus is provided. In a design, the apparatus may include corresponding modules for performing the method/operations/steps/actions described in the first aspect. The modules may be hardware circuits, may be software, or may be implemented by using a combination of a hardware circuit and software. In a design, the apparatus includes: a transceiver unit, configured to receive first information, where the first information indicates a training policy of a first intelligent model; and a processing unit, configured to perform model training on the first intelligent model according to the training policy.

According to a sixth aspect, a communication apparatus is provided. In a design, the apparatus may include corresponding modules for performing the method/operations/steps/actions described in the second aspect. The modules may be hardware circuits, may be software, or may be implemented by using a combination of a hardware circuit and software. In a design, the apparatus includes: a processing unit, configured to determine a training policy of a first intelligent model; and a transceiver unit, configured to send first information, where the first information indicates the training policy of the first intelligent model.

According to a seventh aspect, a communication apparatus is provided. In a design, the apparatus may include corresponding modules for performing the method/operations/steps/actions described in the third aspect. The modules may be hardware circuits, may be software, or may be implemented by using a combination of a hardware circuit and software. In a design, the apparatus includes: a transceiver unit, configured to receive second information, where the second information indicates a structure of a first intelligent model, and the second information includes one or more of the following structure information of the first intelligent model: network layer structure information, a dimension of input data, or a dimension of output data; and a processing unit, configured to determine the structure of the first intelligent model based on the second information. The processing unit is further configured to perform model training on the first intelligent model.

According to an eighth aspect, a communication apparatus is provided. In a design, the apparatus may include corresponding modules for performing the method/operations/steps/actions described in the fourth aspect. The modules may be hardware circuits, may be software, or may be implemented by using a combination of a hardware circuit and software. In a design, the apparatus includes: a processing unit, configured to determine a structure of a first intelligent model; and a transceiver unit, configured to send second information, where the second information indicates the structure of the first intelligent model, and the second information includes one or more of the following structure information of the first intelligent model: network layer structure information, a dimension of input data, or a dimension of output data.

According to a ninth aspect, a communication apparatus is provided. The apparatus includes a processor. The processor may implement the method according to any one of the first aspect or the third aspect and the possible implementations of the first aspect or the third aspect. Optionally, the communication apparatus further includes a memory. The processor is coupled to the memory, and may be configured to execute instructions in the memory, to implement the method according to any one of the first aspect or the third aspect and the possible implementations of the first aspect or the third aspect. Optionally, the communication apparatus further includes a communication interface. The processor is coupled to the communication interface. In the present disclosure, the communication interface may be a transceiver, a pin, a circuit, a bus, a module, or a communication interface of another type. This is not limited.

In an implementation, the communication apparatus is a terminal. When the communication apparatus is the terminal, the communication interface may be a transceiver or an input/output interface.

In another implementation, the communication apparatus is a chip disposed in a terminal. When the communication apparatus is the chip disposed in the terminal, the communication interface may be an input/output interface.

Optionally, the transceiver may be a transceiver circuit. Optionally, the input/output interface may be an input/output circuit.

According to a tenth aspect, a communication apparatus is provided. The apparatus includes a processor. The processor may implement the method according to any one of the second aspect or the fourth aspect and the possible implementations of the second aspect or the fourth aspect. Optionally, the communication apparatus further includes a memory. The processor is coupled to the memory, and may be configured to execute instructions in the memory, to implement the method according to any one of the second aspect or the fourth aspect and the possible implementations of the second aspect or the fourth aspect. Optionally, the communication apparatus further includes a communication interface. The processor is coupled to the communication interface.

In an implementation, the communication apparatus is an access network node. When the communication apparatus is the access network node, the communication interface may be a transceiver or an input/output interface.

In another implementation, the communication apparatus is a chip disposed in an access network node. When the communication apparatus is the chip disposed in the first access network node, the communication interface may be an input/output interface.

Optionally, the transceiver may be a transceiver circuit. Optionally, the input/output interface may be an input/output circuit.

According to an eleventh aspect, a processor is provided. The processor includes an input circuit, an output circuit, and a processing circuit. The processing circuit is configured to receive a signal through the input circuit, and transmit a signal through the output circuit, to enable the processor to perform the method according to any one of the first aspect to the fourth aspect and the possible implementations of the first aspect to the fourth aspect.

During specific implementation, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in the present disclosure.

According to a twelfth aspect, a computer program product is provided. The computer program product includes a computer program (which may also be referred to as code or instructions). When the computer program is run, a computer is enabled to perform the method according to any one of the first aspect to the fourth aspect and the possible implementations of the first aspect to the fourth aspect.

According to a thirteenth aspect, a computer-readable storage medium is provided. The computer-readable storage medium stores a computer program (which may also be referred to as code or instructions). When the computer program is run on a computer, the computer is enabled to perform the method according to any one of the first aspect to the fourth aspect and the possible implementations of the first aspect to the fourth aspect.

According to a fourteenth aspect, a communication system is provided. The communication system includes at least one of the foregoing apparatuses configured to implement a method of a terminal and at least one of the foregoing apparatuses configured to implement a method of an access network node.

## BRIEF DESCRIPTION OF DRAWINGS

FIG. 1 is a diagram of a communication system according to the present disclosure;
FIG. 2A is an example diagram of an application framework of AI in a communication system according to the present disclosure;
FIG. 2B to FIG. 2E are diagrams of network architectures according to the present disclosure;
FIG. 2F is a diagram of a relationship between neural network layers according to the present disclosure;
FIG. 3 is a diagram of a training process of an intelligent model according to the present disclosure;
FIG. 4 is a schematic flowchart of a communication method according to the present disclosure;
FIG. 5A is a diagram of an input/output relationship of a neuron without using a dropout manner according to the present disclosure;
FIG. 5B is a diagram of an input/output relationship of a neuron using a dropout manner according to the present disclosure;
FIG. 5C is another schematic flowchart of a communication method according to the present disclosure;
FIG. 6 is another schematic flowchart of a communication method according to the present disclosure;
FIG. 7 is a schematic block diagram of an example of a communication apparatus according to the present disclosure;
FIG. 8 is a diagram of a structure of an example of a terminal device according to the present disclosure; and
FIG. 9 is a diagram of a structure of an example of a network device according to the present disclosure.

## DESCRIPTION OF EMBODIMENTS

In the present disclosure, at least one may be further described as one or more, and a plurality of may be two, three, four, or more. This is not limited. "/" may represent an "or" relationship between associated objects. For example, A/B may represent A or B. "And/or" may be used to describe that three relationships exist between associated objects. For example, A and/or B may represent the following three cases: Only A exists, both A and B exist, and only B exists, where A and B may be singular or plural. For ease of description of the technical solutions in the present disclosure, the terms such as "first", "second", "A", or "B" may be used to distinguish between technical features with a same or similar function. The terms such as "first", "second", "A", or "B" do not limit a quantity and an execution sequence. In addition, the terms such as "first", "second", "A", or "B" are not limited to be definitely different. The terms such as "example" or "for example" are used to represent an example, an illustration, or a description. Any design solution described as "example" or "for example" should not be explained as being more preferred or advantageous than another design solution. The terms such as "example" and "for example" are used to present a related concept in a specific manner for ease of understanding.

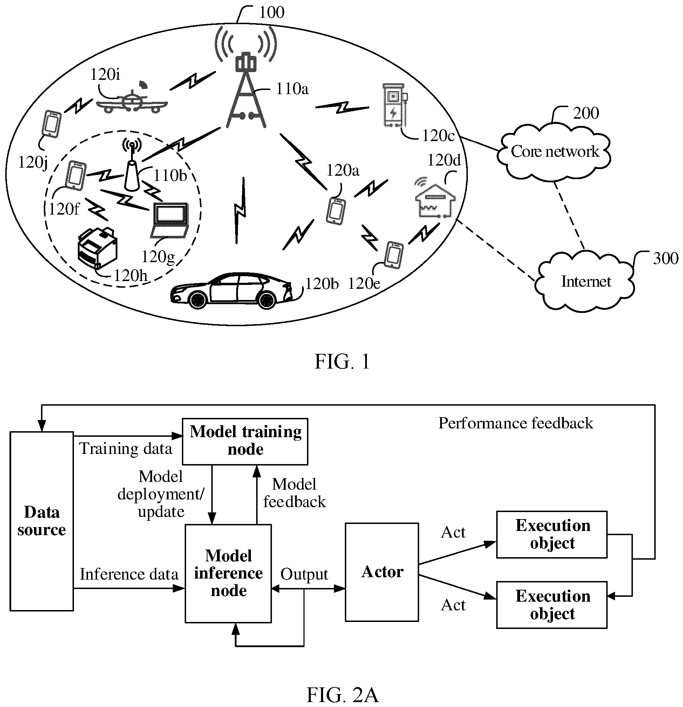

FIG. 1 is a diagram of an architecture of a communication system 1000 to which the present disclosure can be applied. As shown in FIG. 1, the communication system includes a radio access network (radio access network, RAN) 100 and a core network (core network, CN) 200. Optionally, the communication system 1000 may further include the internet 300. The radio access network 100 may include at least one access network node (for example, 110a and 110b in FIG. 1), and may further include at least one terminal (for example, 120a to 120j in FIG. 1). The terminal is connected to the access network node in a wireless communication manner. The access network node is connected to a core network in a wireless communication or wired communication manner. A core network device and the access network node may be different physical devices independent of each other; or may be a same physical device that integrates a function of a core network device and a function of the access network node; or may be another possible case. For example, one physical device may integrate a function of the access network node and a part of functions of the core network device, and the other physical device implements the remaining part of the functions of the core network device. Physical existence forms of the core network device and the access network node are not limited in the present disclosure. The terminal may be connected to another terminal in a wired or wireless manner. The access network node may be connected to another access network node in a wired or wireless manner. FIG. 1 is merely a diagram. The communication system may further include another network device, for example, may further include a wireless relay device, a wireless backhaul device, and the like.

The access network node may be an access network device, for example, a base station (base station), a NodeB (NodeB), an evolved NodeB (evolved NodeB, eNodeB, or eNB), a transmission reception point (transmission reception point, TRP), a next generation NodeB (next generation NodeB, gNB) in a 5th generation (5th generation, 5G) mobile communication system, an access network node in an open radio access network (open radio access network, O-RAN, or open RAN), a next generation base station in a 6th generation (6th generation, 6G) mobile communication system, a base station in a future mobile communication system, or an access node in a wireless fidelity (wireless fidelity, Wi-Fi) system. Alternatively, the access network node may be a module or a unit that completes a part of functions of a base station, for example, may be a central unit (central unit, CU), a distributed unit (distributed unit, DU), a central unit control plane (CU control plane, CU-CP) module, or a central unit user plane (CU user plane, CU-UP) module. The access network node may be a macro base station (for example, 110a in FIG. 1), may be a micro base station or an indoor base station (for example, 110b in FIG. 1), or may be a relay node, a donor node, or the like. A specific technology and a specific device form that are used by the access network node are not limited in the present disclosure. The 5G system may also be referred to as a new radio (new radio, NR) system.

In the present disclosure, an apparatus configured to implement the function of the access network node may be an access network node, or may be an apparatus that can support the access network node in implementing the function, for example, a chip system, a hardware circuit, a software module, or a hardware circuit plus a software module. The apparatus may be installed in the access network node or may be used with the access network node in a matched manner. In the present disclosure, the chip system may include a chip, or may include a chip and another discrete component. For ease of description, the following describes the technical solutions provided in the present disclosure by using an example in which the apparatus configured to implement the function of the access network node is an access network node, and optionally, the access network node is a base station.

The terminal may also be referred to as a terminal device, user equipment (user equipment, UE), a mobile station, a mobile terminal, or the like. The terminal may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communication (massive machine-type communication, mMTC), device-to-device (device-to-device, D2D), vehicle-to-everything (vehicle-to-everything, V2X), machine-type communication (machine-type communication, MTC), internet of things (internet of things, IOT), virtual reality, augmented reality, industrial control, autonomous driving, telemedicine, smart grid, smart furniture, smart office, smart wearable, intelligent transportation, smart city, or the like. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in the present disclosure.

In the present disclosure, an apparatus configured to implement a function of the terminal may be a terminal, or may be an apparatus that can support the terminal device in implementing the function, for example, a chip system, a hardware circuit, a software module, or a hardware circuit plus a software module. The apparatus may be installed in the terminal or may be used with the terminal in a matched manner. For ease of description, the following describes the technical solutions provided in the present disclosure by using an example in which the apparatus configured to implement the function of the terminal is a terminal, and optionally, by using an example in which the terminal is UE.

The base station and/or the terminal may be at a fixed position, or may be movable. The base station and/or the terminal may be deployed on land, indoor or outdoor, or may be handheld or vehicle-mounted; or may be deployed on the water; or may be deployed on an airplane, a balloon, or a satellite in the air. An environment/a scenario for the base station and the terminal is not limited in the present disclosure. The base station and the terminal may be deployed in a same environment/scenario or different environments/scenarios. For example, the base station and the terminal are both deployed on land. Alternatively, the base station is deployed on land, and the terminal is deployed on the water. Examples are not provided one by one.

Roles of the base station and the terminal may be relative. For example, the helicopter or uncrewed aerial vehicle 120i in FIG. 1 may be configured as a mobile base station. For the terminal 120j that accesses the radio access network 100 through 120i, the terminal 120i is a base station; while for the base station 110a, 120i may be a terminal. In other words, 110a and 120i may communicate with each other according to a radio air interface protocol. Alternatively, 110a and 120i communicate with each other according to an interface protocol between base stations. In this case, for 110a, 120i is also a base station. Therefore, the base station and the terminal may be collectively referred to as communication apparatuses (or communication devices). 110a and 110b in FIG. 1 may be referred to as communication apparatuses having a base station function, and 120a to 120j in FIG. 1 may be referred to as communication apparatuses having a terminal function.

Optionally, a protocol layer structure between the access network node and the terminal may include an artificial intelligence (artificial intelligence, AI) layer, used for transmission of data related to an AI function.

In the present disclosure, an independent network element (which is referred to as, for example, an AI entity, an AI network element, an AI node, or an AI device) may be introduced into the communication system shown in FIG. 1, to implement an AI-related operation. The AI network element may be directly connected to the base station, or may be indirectly connected to the base station through a third-party network element. Optionally, the third-party network element may be a core network element, for example, an access and mobility management function (access and mobility management function, AMF) network element or a user plane function (user plane function, UPF) network element. Alternatively, an AI entity (which may also be referred to as an AI module or another name) may be disposed in a network element in the communication system to implement an AI-related operation. Optionally, the network element in which the AI entity is disposed may be a base station, a core network device, an operations, administration, and maintenance (operations, administration, and maintenance, OAM) device, or the like. The OAM is configured for operation, management, and/or maintenance of a core network device (an operations, administration, and maintenance system of the core network device), and/or is configured for operations, management, and/or maintenance of an access network node (an operations, administration, and maintenance system of the access network node).

Optionally, to match and support AI, the AI entity may be integrated into a terminal or a terminal chip.

Optionally, in the present disclosure, the AI entity may also be referred to as another name, for example, an AI module or an AI unit, and is mainly configured to implement the AI function (or referred to as the AI-related operation). A specific name of the AI entity is not limited in the present disclosure.

In the present disclosure, an AI model is a specific method for implementing the AI function. The AI model represents a mapping relationship between an input and an output of the model. The AI model may be a neural network, a linear regression model, a decision tree model, a SVD-clustering model, or another machine learning model. The AI model may be referred to as an intelligent model, a model, or another name for short. This is not limited. The AI-related operation may include at least one of the following: data collection, model training, model information release, model testing (or referred to as model checking), model inference (or referred to as model inference, inference, prediction, or the like), inference result release, or the like.

FIG. 2A is an example diagram of a first application framework of AI in a communication system. In FIG. 2A, a data source (data source) is used to store training data and inference data. A model training host (model training host) analyzes or trains training data (training data) provided by the data source to obtain an AI model, and deploys the AI model on a model inference host (model inference host). The AI model represents a mapping relationship between an input and an output of the model. Obtaining an AI model through learning by the model training host is equivalent to obtaining the mapping relationship between the input and the output of the model through learning by the model training host by using the training data. The model inference host uses the AI model to perform inference based on the inference data provided by the data source and obtain an inference result. The method may also be described as follows: The model inference host inputs the inference data into the AI model, and obtains an output by using the AI model, where the output is the inference result. The inference result may indicate a configuration parameter used (acted) by an execution object, and/or an operation performed by the execution object. The inference result may be uniformly planned by an actor (actor) entity, and sent to one or more execution objects (for example, a network element) for execution. Optionally, the model inference host may feed back the inference result of the model inference host to the model training host. This process may be referred to as model feedback. A fed-back parameter is used by the model training host to update the AI model, and deploy the updated AI model on the model inference host. Optionally, the execution object may feed back a network parameter collected by the execution object to the data source. This process may be referred to as performance feedback. The fed-back parameter may be used as the training data or the inference data.

In the present disclosure, the application framework shown in FIG. 2A may be deployed in the network element shown in FIG. 1. For example, the application framework in FIG. 2A may be deployed in at least one of the terminal device, the access network device, the core network device, or an independently deployed AI network element (not shown) in FIG. 1. For example, the AI network element (which may be considered as the model training host) may perform analysis or training on training data (training data) provided by the terminal device and/or the access network device, to obtain a model. The at least one of the terminal device, the access network device, or the core network device (which may be considered as the model inference host) may perform inference by using the model and the inference data, to obtain the output of the model. The inference data may be provided by the terminal device and/or the access network device. The input of the model includes the inference data, and the output of the model is the inference result corresponding to the model. The at least one of the terminal device, the access network device, or the core network device (which may be considered as the execution object) may perform a corresponding operation based on the inference data and/or the inference result. The model inference host and the execution object may be the same or may be different. This is not limited.

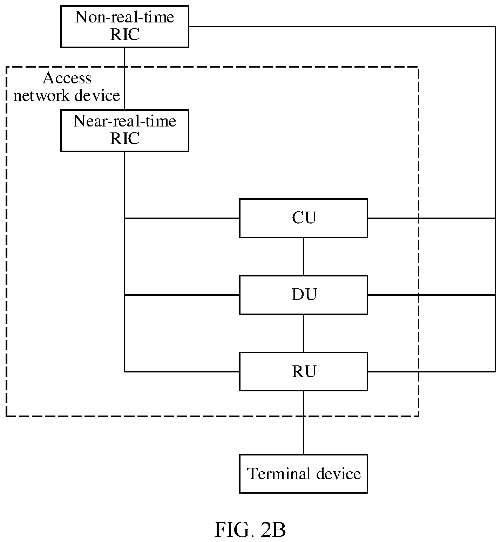

With reference to FIG. 2B to FIG. 2E, the following describes a network architecture to which the communication solution provided in the present disclosure can be applied.

As shown in FIG. 2B, in a first possible implementation, an access network device includes a near-real-time access network intelligent control (RAN intelligent controller, RIC) module, configured to perform model learning and inference. For example, the near-real-time RIC may be configured to train an AI model, and use the AI model for inference. For example, the near-real-time RIC may obtain information on a network side and/or a terminal side from at least one of a CU, a DU, or an RU. The information may be used as training data or inference data. Optionally, the near-real-time RIC may submit an inference result to the at least one of the CU, the DU, or the RU. Optionally, the CU and the DU may exchange the inference result. Optionally, the DU and the RU may exchange the inference result. For example, the near-real-time RIC submits the inference result to the DU, and the DU forwards the inference result to the RU.

As shown in FIG. 2B, in a second possible implementation, there is a non-real-time RIC (optionally, the non-real-time RIC may be located in an OAM or a core network device) outside an access network, configured to perform model learning and inference. For example, the non-real-time RIC is configured to train an AI model, and use the model for inference. For example, the non-real-time RIC may obtain information on a network side and/or a terminal side from at least one of a CU, a DU, or an RU. The information may be used as training data or inference data, and an inference result may be submitted to the at least one of the CU, the DU, or the RU. Optionally, the CU and the DU may exchange the inference result. Optionally, the DU and the RU may exchange the inference result. For example, the non-real-time RIC submits the inference result to the DU, and the DU forwards the inference result to the RU.

As shown in FIG. 2B, in a third possible implementation, an access network device includes a near-real-time RIC, and there is a non-real-time RIC (optionally, the non-real-time RIC may be located in an OAM or a core network device) outside the access network. Same as the second possible implementation, the non-real-time RIC may be configured to perform model learning and inference. Additionally/alternatively, same as the first possible implementation, the near-real-time RIC may be configured to perform model learning and inference. Additionally/alternatively, the near-real-time RIC may obtain AI model information from the non-real-time RIC, obtain information on a network side and/or a terminal side from at least one of a CU, a DU, or an RU, and obtain an inference result by using the information and the AI model information. Optionally, the near-real-time RIC may submit the inference result to the at least one of the CU, the DU, or the RU. Optionally, the CU and the DU may exchange the inference result. Optionally, the DU and the RU may exchange the inference result. For example, the near-real-time RIC submits the inference result to the DU, and the DU submits the inference result to the RU. For example, the near-real-time RIC is configured to train a model A, and use the model A for inference. For example, the non-real-time RIC is configured to train a model B, and use the model B for inference. For example, the non-real-time RIC is configured to train a model C, and submits information about the model C to the near-real-time RIC, and the near-real-time RIC uses the model C for inference.

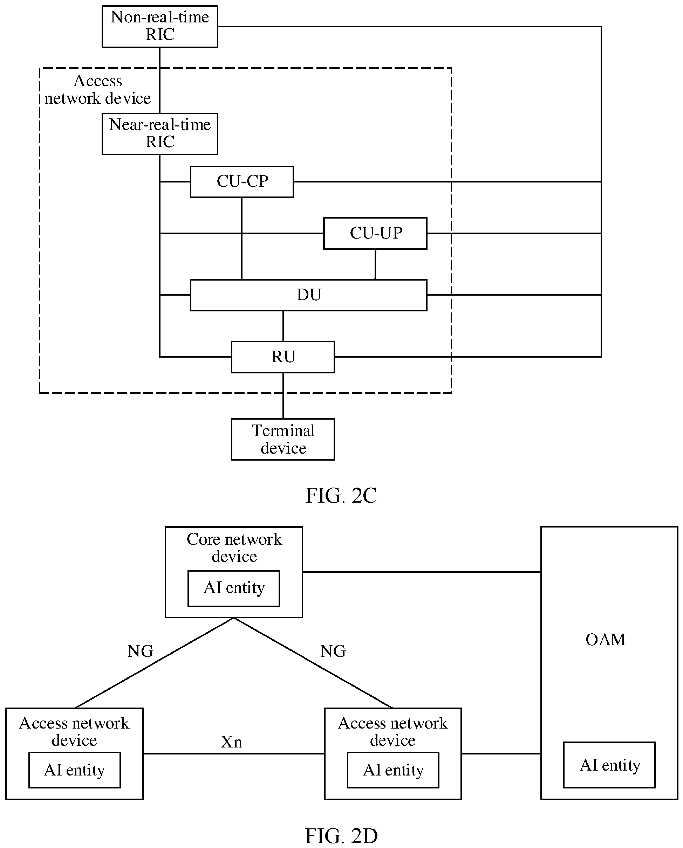

FIG. 2C is an example diagram of a network architecture to which the method provided in the present disclosure can be applied. In comparison with FIG. 2B, in FIG. 2C, a CU is split into a CU-CP and a CU-UP.

FIG. 2D is an example diagram of a network architecture to which the method provided in the present disclosure can be applied. As shown in FIG. 2D, optionally, an access network device includes one or more AI entities, and a function of the AI entity is similar to that of the foregoing near-real-time RIC. Optionally, an OAM includes one or more AI entities, and a function of the AI entity is similar to that of the foregoing non-real-time RIC. Optionally, a core network device includes one or more AI entities, and a function of the AI entity is similar to that of the foregoing non-real-time RIC. When the OAM and the core network device each include an AI entity, models obtained through training by the AI entities of the OAM and the core network device are different, and/or models used for inference are different.

In the present disclosure, a model difference includes at least one of the following differences: a structure parameter of the model (for example, at least one of a quantity of model layers, a model width, a connection relationship between layers, a weight of a neuron, an activation function of a neuron, or an offset in an activation function), an input parameter of the model (for example, a type of the input parameter and/or a dimension of the input parameter), or an output parameter of the model (for example, a type of the output parameter and/or a dimension of the output parameter).

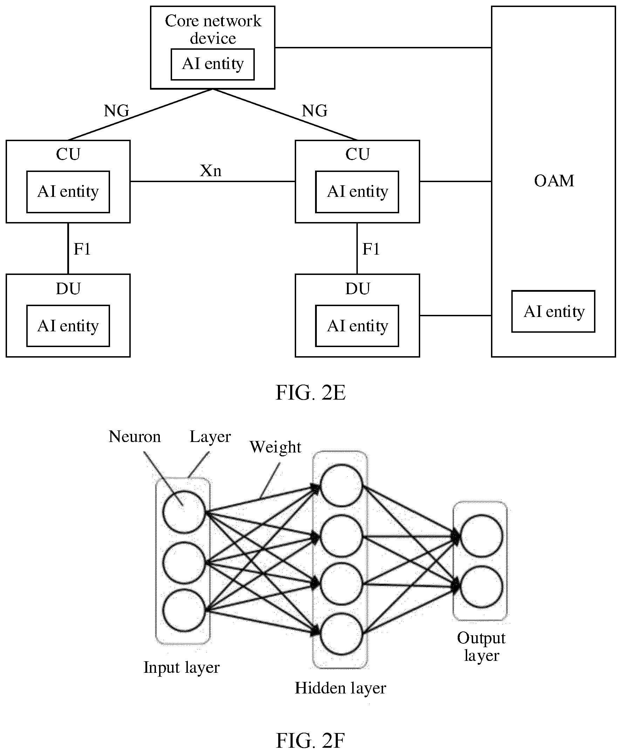

FIG. 2E is an example diagram of a network architecture to which the method provided in the present disclosure can be applied. In comparison with FIG. 2D, an access network device in FIG. 2E is split into a CU and a DU. Optionally, the CU may include an AI entity, and a function of the AI entity is similar to that of the near-real-time RIC. Optionally, the DU may include an AI entity, and a function of the AI entity is similar to that of the near-real-time RIC. When the CU and the DU each include an AI entity, models obtained through training by the AI entities of the CU and the DU are different, and/or models used for inference are different. Optionally, the CU in FIG. 2E may be further split into a CU-CP and a CU-UP. Optionally, one or more AI models may be deployed in the CU-CP. Optionally, one or more AI models may be deployed in the CU-UP.

Optionally, as described above, in FIG. 2D or FIG. 2E, the OAM of the access network device and the OAM of the core network device may be separately deployed. In FIG. 2D or FIG. 2E, the core network device may include one or more modules, for example, including

In the present disclosure, one parameter or a plurality of parameters may be obtained through inference by using one model. Learning processes of different models may be deployed on different devices or nodes, or may be deployed on a same device or node. Inference processes of different models may be deployed on different devices or nodes, or may be deployed on a same device or node.

The network architecture and the service scenario described in the present disclosure are intended to describe the technical solutions in the present disclosure more clearly, and do not constitute a limitation on the technical solutions provided in the present disclosure. A person of ordinary skill in the art may know that, with evolution of the network architecture and emergence of new service scenarios, the technical solutions provided in the present disclosure are also applicable to similar technical problems.

Before the method in the present disclosure is described, some related knowledge about artificial intelligence is first briefly described. Artificial intelligence can empower a machine with human intelligence. For example, the machine can simulate some intelligent human behavior by using computer software and hardware. To implement artificial intelligence, a machine learning method or another method may be used. This is not limited.

A neural network (neural network, NN) is a specific implementation of machine learning. According to the general approximation theorem, the neural network can approximate any continuous function in theory, so that the neural network can learn any mapping. Therefore, the neural network can accurately perform abstract modeling on a complex high-dimensional problem. In other words, an intelligent model may be implemented by using the neural network.

The idea of the neural network comes from a neuron structure of brain tissue. Each neuron performs a weighted summation operation on an input value of the neuron, and outputs a result of the weighted summation through an activation function. It is assumed that an input of the neuron is $x = [x_0,...,x_n]$, a weight (or referred to as a weight) corresponding to the input is $w = [w_0,...,w_n]$, and an offset of a weighted sum is $b$. Forms of the activation function may be diversified. If the activation function of a neuron is $y = f(z) = \max(0, z)$, an output of the neuron is

$$y = f\left(\sum_{i=0}^{i=n} w_i \cdot x_i + b\right) = \max\left(0, \sum_{i=0}^{i=n} w_i \cdot x_i + b\right)$$

. For another example, if the activation function of a neuron is

$$y = f\left(\sum_{i=0}^{i=n} w_i \cdot x_i + b\right) = \sum_{i=0}^{i=n} w_i \cdot x_i + b$$

$y = f(z) = z$, an output of the neuron is ____. An element $x_i$ in the input x of the neuron, an element $w_i$ of the weight w, or the offset b may have various possible values such as a decimal, an integer (including 0, a positive integer, a negative integer, or the like), or a complex number. Activation functions of different neurons in the neural network may be the same or different.

The neural network generally includes a multi-layer structure, and each layer may include one or more neurons. Increasing a depth and/or a width of the neural network can improve an expression capability of the neural network, and provide more powerful information extraction and abstract modeling capabilities for a complex system. The depth of the neural network indicates a quantity of layers included in the neural network, and a quantity of neurons included in each layer may be referred to as the width of the layer. FIG. 2F is a diagram of a layer relationship of a neural network.

In an implementation, the neural network includes an input layer and an output layer. After performing neuron processing on a received input, the input layer of the neural network transfers a result to the output layer, and the output layer obtains an output result of the neural network.

In another implementation, the neural network includes an input layer, a hidden layer, and an output layer. The input layer of the neural network performs neuron processing on a received input, and then transfers a result to an intermediate hidden layer. The hidden layer then transfers a calculation result to the output layer or an adjacent hidden layer. Finally, the output layer obtains an output result of the neural network. One neural network may include one or more hidden layers that are sequentially connected. This is not limited.

In a training process of an AI model, a loss function may be defined. The loss function describes a difference between an output value of the AI model and an ideal target value. A specific form of the loss function is not limited in the present disclosure. The training process of the AI model is a process of adjusting a part of or all parameters of the AI model, so that a value of the loss function is less than a threshold or meets a target requirement. For example, the AI model is a neural network. In a training process of the neural network, one or more of the following parameters may be adjusted: a quantity of layers of the neural network, a neural network width, a connection relationship between layers, a weight of a neuron, an activation function of the neuron, or an offset in the activation function, so that a difference between an output of the neural network and an ideal target value is as small as possible.

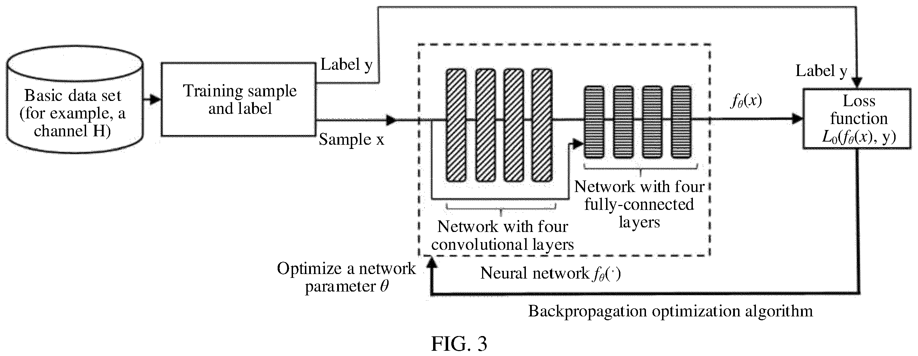

FIG. 3 is an example diagram of a training process of an intelligent model. As shown in FIG. 3, an example in which the intelligent model is a neural network model, and the neural network $f_\theta(\bullet)$ may include a network with four convolutional layers and a network with four fully-connected layers is used for description. An AI entity may obtain training data from a basic data set (for example, a set of channel data). The training data may include a training sample and a label. Used as an input, a sample x is processed by the neural network $f_\theta(\cdot)$ and then an inference result $f_\theta(x)$ is output. An error between the inference result and the label is obtained through calculation by using a loss function. The AI entity may optimize, based on the error obtained by using the loss function, a network parameter $\theta$ by using a backpropagation optimization algorithm (which may be referred to as a model optimization algorithm). The neural network is trained by using a large amount of training data, so that training of the neural network is completed after a difference between an output of the neural network and the label is less than a preset value.

It should be noted that, in the training process shown in FIG. 3, a training manner of supervised learning is used, in other words, model training is implemented based on the sample and the label by using the loss function. The training process of the intelligent model may alternatively use unsupervised learning. An internal pattern of the sample is learned by using an algorithm, to complete training of the intelligent model based on the sample. The training process of the intelligent model may alternatively use reinforcement learning. An excitation signal fed back by an environment is obtained through interaction with the environment, to learn a problem resolution policy and optimize the model. A model training method and a model type are not limited in the present disclosure.

The trained AI model can execute an inference task. After actual data is input into the AI model for processing, a corresponding inference result is obtained. Optionally, one parameter or a plurality of parameters may be obtained through inference by using one AI model.

Application of artificial intelligence in a wireless communication system can significantly improve performance of the communication system. In most scenarios, a network side and a terminal need to use a matching artificial intelligence model to improve wireless communication performance. For example, the terminal may perform compression encoding on uplink information by using a compression encoder model, and then send encoded uplink information to the network side, and the network side decodes the encoded uplink information by using a matching decoder model, to obtain the uplink information sent by the terminal. Application of artificial intelligence in the field of wireless communication usually relates to complex nonlinear function fitting. A scale of an intelligent model is usually large, for example, a quantity of model layers is large, and a quantity of model parameters is large. For example, a convolutional neural network (convolutional neural network, CNN) of an encoder model that implements CSI feedback compression may include 15 neural network layers.

To meet a performance requirement, an intelligent model used by a terminal is usually specified by a network. The network side may select one model from a plurality of predefined models, and notify the terminal of an identifier of the model, so that the terminal can determine a to-be-used model based on the identifier. However, there are various types of terminals, a channel environment is complex and changeable, and a quantity of predefined models is limited. Therefore, good communication performance cannot be ensured in all environments. To ensure communication performance, the network side may alternatively deliver the intelligent model to the terminal. However, a quantity of parameters of the intelligent model is large, and a large quantity of air interface resources need to be occupied, which affects transmission efficiency of service data. If the terminal downloads the model from the network, the terminal needs to download a structure parameter of the model, a weight of each neuron, an activation function, an offset, and the like. A total quantity of parameters reaches hundreds of thousands of floating point numbers. In this case, air interface resource overheads are huge, so that air interface resources of the service data are reduced, and the transmission efficiency of the service data is reduced. For this problem, the present disclosure proposes that the network may notify the terminal of a training policy of the intelligent model, and the terminal trains the intelligent model according to the training policy provided by the network, so that a model obtained through training by the terminal can match a model used by the network, thereby meeting an expected performance requirement.

The following describes a communication method provided in the present disclosure with reference to the accompanying drawings. It should be noted that interaction between a terminal and an access network node is used as an example in this specification, but this application is not limited thereto. The communication method provided in the present disclosure may be used between any two nodes. One node obtains a training policy and/or a model structure of an intelligent model from the other node, and performs model training according to the training policy and/or based on the model structure. In the present disclosure, as described above, one or more modules (such as an RU, a DU, a CU, a CU-CP, a CU-UP, or a near-real-time RIC) of the access network node may implement a corresponding method or operation of the access network node.

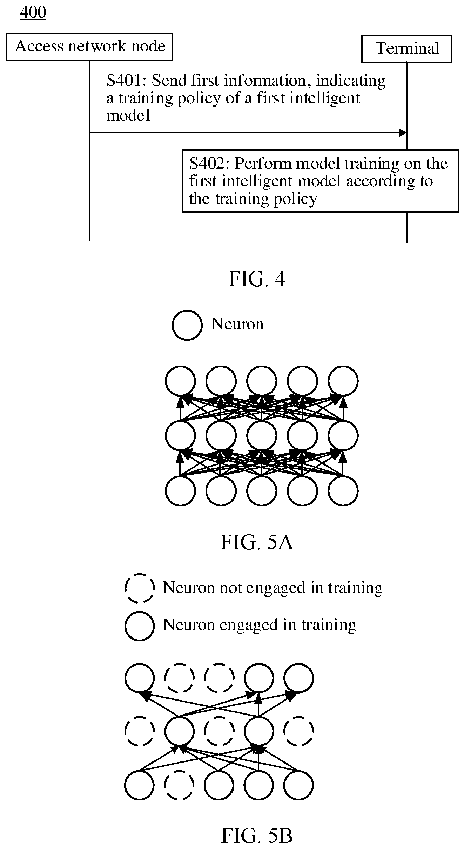

FIG. 4 is a schematic flowchart of a communication method 400 according to the present disclosure.

S401: An access network node sends first information to a terminal, where the first information indicates a training policy of a first intelligent model.

Correspondingly, the terminal receives the first information from the access network node. The terminal determines the training policy of the first intelligent model based on the first information.

In the present disclosure, by way of example and not limitation, the training policy includes one or more of the following:

a model training manner, loss function information, a model initialization manner, a model optimization algorithm type, or an optimization algorithm parameter.

The following describes the foregoing training policies one by one.

(1) Model training manner

The first information may indicate a training manner in which the terminal trains the first intelligent model, and the terminal may train the first intelligent model in the model training manner indicated by the first information, so that a first intelligent model obtained through training can match an intelligent model on a network side. In this way, wireless communication performance is improved.

For example, the first information may indicate the terminal to train the first intelligent model in one of supervised learning, unsupervised learning, or reinforcement learning. However, the present disclosure is not limited thereto.

(2) Loss function information

The first information may include the loss function information. After receiving the first information, the terminal may obtain, based on the loss function information, a loss function used to train the first intelligent model.

The access network node may notify the terminal of the used loss function by using the loss function information. The loss function information may directly indicate the loss function, or the loss function information may indicate identification information of one of a plurality of predefined loss functions.

In an example, the terminal may train the first intelligent model in a manner of supervised learning. For example, the training manner of supervised learning may be predefined, or the access network node indicates, by using the first information, that the model training manner is the training manner of supervised learning. For example, a training objective of the model training manner of supervised learning is to enable a value of the loss function to reach a minimum value. In specific implementation, model training may be completed when the value of the loss function obtained through training is less than or equal to a first threshold. Optionally, the first threshold may be predefined, or may be indicated by the loss function information.

For example, the loss function may be the following cross entropy loss function:

$$\sum -\left[ y_n \times \log\left( f_\theta\left( x_n \right)\right) + \left(1 - y_n\right) \times \log\left(1 - f_\theta\left( x_n \right)\right)\right]$$

$\log(A)$ represents calculation of a logarithm of A, and $\Sigma_n B_n$ represents summation over $B_n$ based on a value range of n.

Alternatively, the loss function may be the following quadratic loss function:

$$\sum_n (y_n - y_\theta\left( x_n \right))^2$$

$x_n$ is a sample, $y_n$ is a label of an $n^{th}$ sample, and $f_\theta(x_n)$ is an output result of the model for input data $x_n$.

In another example, the terminal may train the first intelligent model in a manner of unsupervised learning. For the unsupervised learning, the loss function may be a function used to evaluate model performance. For example, a training objective of the model training manner of unsupervised learning is to enable a value of the loss function to reach a maximum value. In specific implementation, model training may be completed when the value of the loss function obtained through training is greater than or equal to a second threshold. Optionally, the second threshold may be predefined, or may be indicated by the loss function information.

For example, if the first intelligent model is used to infer a transmit power based on a channel response, an input of the first intelligent model is a channel response $h_n$, and an inference result of the first intelligent model is a transmit power $P_n$. In this case, the loss function may be a function for calculating a data throughput. For example, the loss function may be as follows:

$$\log\left(1 + \frac{h_n^2 \times P_n}{N_0}\right)$$

$\log(A)$ represents calculation of a logarithm of $A$, and $N_0$ is noise power.

The loss function may be the foregoing mathematical expression. Optionally, the loss function may alternatively be a machine learning intelligent model. Complexity and a parameter quantity of the loss function model are far less than complexity and a parameter quantity of the first intelligent model. The loss function information may include structure information and/or parameter information of the loss function, so that the terminal can obtain the loss function model after receiving the first information, and train the first intelligent model based on the loss function, thereby improving model training effect of the terminal.

For example, when the training manner of unsupervised learning is used, the loss function may be a nonlinear performance measurement model for a system throughput, a signal bit error rate, a signal to interference plus noise ratio, and the like.

(3) Model initialization manner

The first information may indicate the model initialization manner, and the terminal may initialize the first intelligent model based on the model initialization manner indicated by the first information.

In an example, the first intelligent model may be a neural network model, and the first information may indicate an initialization manner of a weight of a neuron in the first intelligent model. For example, the access network node may indicate the terminal to randomly select a value as a weight of each neuron, or indicate that weights of all neurons are 0, or the weight of the neuron is generated by using a preset function, or the like.

For example, the access network node may indicate, by using the first information, the terminal to randomly select a value in a range $[z_{min}, z_{max}]$ as the weight of the neuron. For example, the first information may indicate $z_{min}$ and $z_{max}$. After receiving the first information, the terminal selects a value in the range $[z_{min}, z_{max}]$ for each neuron, and uses the value as an initial value of the weight of the neuron.

For another example, the first information indicates identification information of one of a plurality of predefined initialization manners. For example, the first information includes a 2-bit indication field, to indicate an initialization manner of a weight of a neuron. A 2-bit indication "00" represents that an initial value of the weight of the neuron is randomly selected. Optionally, the terminal may select a weight in a preset value range for each neuron, or when the first information indicates the manner, the first information further includes an endpoint value in the value range, and the terminal selects a weight in the value range indicated by the first information for the neuron. A 2-bit indication "01" represents that initial values of all neurons are set to 0. A 2-bit indication "10" represents that an initial value sequence is generated by using a preset function, and each value in the sequence is used as an initial value of one neuron.

(4) Model optimization algorithm type

In the example shown in FIG. 3, in model training, a training apparatus may obtain an optimization parameter of the intelligent model based on an output value of the loss function by using a model optimization algorithm. After updating the intelligent model based on the optimization parameter, the training apparatus performs next model training on the intelligent model whose parameter is updated. The access network node may notify the terminal of an optimization algorithm of the first intelligent model by using the first information.

For example, the first information may indicate a type of optimization algorithm in a plurality of types of predefined model optimization algorithms. When training the first intelligent model, the terminal may perform model optimization by using the model optimization algorithm indicated by the first information. By way of example and not limitation, the model optimization algorithm may include but is not limited to one or more of the following algorithms:

an adaptive momentum estimation (adaptive momentum estimation, ADAM) algorithm, a stochastic gradient descent (stochastic gradient descent, SGD) algorithm, or a batch gradient descent (batch gradient descent, BGD) algorithm.

Optionally, a communication protocol may predefine a plurality of types of model optimization algorithms, and a parameter of each type of model optimization algorithm may also be predefined. The terminal may determine the type of the optimization algorithm and the predefined parameter of the optimization algorithm based on identification information of the model optimization algorithm type indicated by the first information. During training of the first intelligent model, the terminal updates a model weight by using the model optimization algorithm. Alternatively, the optimization algorithm parameter may be indicated by the first information. For details, refer to the following descriptions.

(5) Optimization algorithm parameter

The first information may indicate the model optimization algorithm parameter. The model optimization algorithm type may be indicated by the access network node by using the first information, or the model optimization algorithm type may be preconfigured.

By way of example and not limitation, the model optimization algorithm parameter may include but is not limited to one or more of the following parameters:

a learning rate, a quantity of iterations, or an amount of data processed in batches.

The learning rate is a parameter that represents a gradient descent step in model training. The learning rate may be a fixed value, and the access network node may notify the terminal of a value of the learning rate by using the first information. For example, the learning rate may be set to 0.001. Alternatively, the learning rate may be set to a value that gradually decreases with iteration steps. The first information may indicate the learning rate and a decreased value of the learning rate obtained through each iteration. For example, the first information may indicate that an initial value is 0.1, and the value decreases by 0.01 after each iteration. The quantity of iterations is a quantity of times that a training data set is traversed. The amount of data processed in batches is an amount of training data that is selected from the training data set during each model training and that is used for gradient descent updating.

According to the foregoing descriptions, the training policy of the first intelligent model indicated by the first information may include but is not limited to one or more of the foregoing policies (1) to (5). In this way, the terminal can train the first intelligent model according to the training policy, to obtain the intelligent model that matches the network.

It should be noted that if the access network node notifies the terminal that one or more of the training policies (1) to (5) are not indicated, the terminal may determine, in but not limited to the following manners, the training policy that is not indicated by the access network node.

In an implementation, the terminal may be preconfigured with one or more of the foregoing training policies. When the access network node does not indicate the one or more of the policies, the terminal performs model training according to the preconfigured training policy. The preconfigured training policy may be defined in a protocol, or the preconfigured training policy may be configured by a manufacturer based on terminal production implementation.

In another implementation, the terminal may determine, based on one or more training policies indicated by the access network node, one or more training policies that are not indicated by the access network node. In other words, there may be an association relationship between a plurality of training policies. The access network node implicitly indicates, by indicating a training policy, another training policy related to the training policy. The association relationship may be agreed on in a protocol, or may be notified by the access network node to the terminal in advance. This is not limited.

For example, the access network node may indicate the model training manner by using the first information, but does not indicate the loss function information, and the terminal determines the loss function based on the model training manner indicated by the access network node. If the first information indicates that the model training manner is the manner of supervised learning, the terminal may determine that the loss function is a cross entropy loss function, or the terminal may determine that the loss function is a quadratic loss function. However, this application is not limited thereto.

Optionally, the access network node may further send second information to the terminal, where the second information indicates a structure of the first intelligent model.

In addition to notifying the terminal of the training policy of the first intelligent model, the access network node further notifies the terminal of the structure of the first intelligent model by using the second information. After receiving the second information, the terminal generates, based on the second information, the initial first intelligent model (or referred to as the first intelligent model before training) having the structure, and trains the first intelligent model by using the training policy indicated by the first information, so that a trained first intelligent model can match a model used by the access network node.

The access network node may indicate identification information of a structure in structures of a plurality of predefined intelligent models, and notify the terminal of an intelligent model that uses the structure. Alternatively, the access network node may indicate a structure parameter of the first intelligent model.

By way of example and not limitation, the second information may specifically indicate one or more of the following structure information of the first intelligent model:

network layer structure information, a dimension of input data, or a dimension of output data.

For example, the second information may indicate the dimension of the input data of the first intelligent model, that is, a dimension of a training sample. If the first intelligent model is a neural network model, and includes an input layer and an output layer, the dimension of the input data is a dimension of input data of the input layer of the first intelligent model.

For another example, the second information may indicate the dimension of the output data of the first intelligent model, that is, a dimension of inference data output by the first intelligent model. If the first intelligent model is a neural network model, the dimension of the output data is a dimension of output data of an output layer of the first intelligent model.

The second information may include the network layer structure information of the first intelligent model, and the network layer structure information may include but is not limited to one or more of the following:

A quantity of neural network layers included in the first intelligent model, a type of the neural network layer, a manner of using the neural network layer, a cascading relationship between the neural network layers, a dimension of input data of the neural network layer, or a dimension of output data of the neural network layer.

For example, the access network node may indicate the quantity of neural network layers included in the first intelligent model, and may indicate the type of each neural network layer, for example, a CNN neural network layer, an FNN neural network layer, or a dimension transformation neural network layer.

If the network layer structure information indicates that the type of a neural network layer in the first intelligent model is the CNN, the CNN may be implemented by a filter. The access network node may further notify, by using the network layer structure information, the terminal of a type of the filter (Filter) for implementing the CNN. For example, the type of the filter may be a dimension of the filter. For example, the network layer structure information may indicate that the dimension of the filter is $3\times3$, $5\times5$, $3\times3\times3$, or the like.

The dimension transformation neural network layer is used to transform a data dimension. For example, the dimension transformation neural network layer may be located between two neural network layers. The dimension transformation neural network layer is used to: transform the dimension of the input data (that is, output data of a previous neural network layer) to obtain the dimension of the input data of a next neural network layer, and output the data obtained through dimension transformation to the next neural network layer. For example, a dimension of output data of a neural network layer A is $3\times3\times10$, and a dimension of input data of a neural network layer B is required to be $30\times3$. In this case, a dimension transformation neural network layer may be set between the two neural network layers, the $3\times3\times10$ data output by the neural network layer A is transformed to the $30\times3$ data, and the $30\times3$ data is output to the neural network layer B. In this way, the data obtained through dimension transformation can continue to be processed by the neural network layer B.

The access network node may further notify, by using the second information, the terminal of a manner of using the neural network layer, for example, may notify the terminal of whether one or more neural network layers in the neural network use a temporary dropout (dropout) manner. The dropout manner means that during model training, one or more neurons at the neural network layer may be randomly selected to skip current training, and the one or more neurons may be restored to the model training in next training.

For example, when a CNN neural network layer does not use the dropout manner, an input/output relationship of neurons at the neural network layer may be shown in FIG. 5A. If a CNN neural network layer uses the dropout manner, an input-output relationship of neurons at the neural network layer may be shown in FIG. 5B. The terminal may randomly select a plurality of neurons at the CNN neural network layer and disengage the neurons from model training, where outputs of the neurons are set to 0, weights of the neurons disengaged from the model training are not updated in current training, and the weights continue to be used when the neurons are engaged in the model training in next training.

The access network node may further notify the terminal of the dimension of the input data and/or the dimension of the output data of the neural network layer in the first intelligent model. Additionally/alternatively, the access network node may further notify the terminal of the cascading relationship between the neural network layers. For example, the cascading relationship between the neural network layers may be an arrangement sequence of the neural network layers in the first intelligent model.

Table 1 shows an example of a neural network structure. The access network node may notify the terminal of the neural network structure shown in Table 1. However, the present disclosure is not limited thereto. For example, the second information indicates that the quantity of neural network layers in the first intelligent model is six, and notifies the type of each neural network layer. For example, the type of the neural network layer includes the input layer, the CNN layer, a shape transformation layer, the FNN layer, and the output layer. The second information may further indicate the cascading relationship between the neural network layers. For example, the second information may indicate that an arrangement sequence of the six neural network layers may be the input layer, the CNN layer, the CNN layer, the shape transformation layer, the FNN layer, and the output layer. In addition, the second information may further indicate an input dimension and an output dimension of each neural network layer, as shown in Table 1, where $N_T$ is a quantity of antennas, and $N_{sc}$ is a quantity of subcarriers. The second information may further notify the terminal that a filter that implements the two CNN layers, to be specific, the 2nd layer and the 3rd layer, is a $3\times3$ filter, and that the 2nd,

the 3rd, the 4th, and the 5th neural network layers may use the dropout manner. However, the present disclosure is not limited thereto. A part of the structure of the first intelligent model may be predefined and another part may be indicated by the access network node by using the second information. For example, the access network node may notify the terminal of a part of or all structure parameters shown in Table 1. N/A shown in Table 1 indicates that the parameter is not applicable (or not configured) in this row.

**Table 1**

| Layer No. | Basic structure of a layer | Configuration parameter of the basic structure of the layer | Manner of using the neural network layer | Input and output dimensions of the layer |
|---|---|---|---|---|
| 1 | Input layer | N/A | N/A | Input: $N_T * N_{sc} * 2$ |
| 2 | CNN | Filter: (3, 3) | Dropout | Input: $N_T * N_{sc} * 2$ <br> Output: $N_T * N_{sc} * 16$ |
| 3 | CNN | Filter: (3, 3) | Dropout | Input: $N_T * N_{sc} * 16$ <br> Output: $N_T * N_{sc} * 4$ |
| 4 | Shape transformation | N/A | Dropout | Input: $N_T * N_{sc} * 4$ <br> Output: $4N_T N_{sc} * 1$ |
| 5 | FNN | N/A | Dropout | Input: $4N_T N_{sc} * 1$ <br> Output: M |
| 6 | Output layer | N/A | N/A | Output: M |

The terminal may generate the initial first intelligent model based on the structure of the first intelligent model that is shown in Table 1 and that is indicated by the second information. The terminal may first determine, based on the second information, that the first intelligent model includes six neural network layers, and indicate, based on the second information, the type, the input dimension, and the output dimension of each of the six neural network layers, to generate six neural network layers that meet a type requirement and a dimension requirement, namely, the input layer, the CNN layer, the CNN layer, the shape transformation layer, the FNN layer, and the output layer. The terminal implements the two CNN layers based on an indication of the second information by using the $3\times3$ filter. After obtaining the six neural network layers, the terminal determines an arrangement sequence of the six neural network layers based on the cascading relationship indicated by the second information, to obtain the initial first intelligent model. In a process of training the first intelligent model, neurons at the 2nd, the 3rd, the 4th, and the 5th neural network layers are randomly selected in each training in the dropout manner, and are disengaged from the current training.

Optionally, the access network node sends third information to the terminal, where the third information indicates information about a training data set, and the training data set is used to train the first intelligent model.

In an example, the third information may indicate identification information of a preset training data set, so that after receiving the third information, the terminal trains the first intelligent model by using the training data set corresponding to the identification information.

For example, a protocol may predefine a plurality of training data sets, and each training data set corresponds to one piece of identification information. The access network node may indicate identification information of one of the plurality of training data sets by using the third information. The terminal determines, based on the identification information, to train the first intelligent model by using the training data set corresponding to the identification information.

In another example, the information about the training data set may indicate a type of a training sample, or a type of a training sample and a type of a label.

For example, the training manner of the first intelligent model is the manner of unsupervised learning, and the third information may indicate the type of the training sample. For example, the first intelligent model may infer a transmit power based on input channel data. In this case, the third information may indicate that the type of the training sample is channel data, and the terminal may train the first intelligent model by using the channel data. The channel data may be obtained through measurement by the terminal based on a reference signal sent by the access network node, or may be preconfigured in the terminal. However, this application is not limited thereto.

For another example, the training manner of the first intelligent model is the manner of unsupervised learning. The third information may indicate the type of the training sample and the type of the label. The terminal may determine the training data set based on the type of the training sample and the type of the label. Data included in the training data set may be data collected during communication between the terminal and the access network node, or may be data of a corresponding type preconfigured in the terminal. For example, the first intelligent model implements a channel coding function of data, in other words, outputs encoded data through inference based on input pre-coding data. The third information may indicate that the type of the training sample is data before channel coding, and the type of the label is data after channel coding.

In another example, the information about the training data set may further indicate a use of the first intelligent model. For example, the information about the training data set indicates that the first intelligent model is used for compression encoding, decoding, or inferring the transmit power. The terminal determines a corresponding training data set based on the use of the first intelligent model.

For example, the third information may indicate that the use of the first intelligent model is compression encoding, and the training manner of the first intelligent model is supervised learning. In this case, the terminal may determine, based on the use of the first intelligent model, that the type of the training sample used to train the first intelligent model is information data before compression encoding and the label is compressed data after compression encoding, to determine the training data set that is of the first intelligent model and that includes the training sample and the label. Data included in the training data set may be data collected during communication between the terminal and the access network node, or may be data of a corresponding type preconfigured in the terminal. However, this application is not limited thereto.

In another example, the third information may include the training data set. For example, the training data set may include a training sample, or a training sample and a label. In other words, the terminal may obtain the training data set from a network.

For example, the training manner of the first intelligent model is the manner of supervised learning, and the training data set in the third information includes the training sample and the label. The training manner of the first intelligent model is the manner of unsupervised learning, and the training data set in the third information includes the training sample but does not include the label.

The terminal may train the first intelligent model while downloading training data in the training data set at a small resource bandwidth, so that resource usage can be reduced, and a transmission rate of service data is not affected.

In the present disclosure, the access network node may determine one or more of the training policy, the model structure, or the training data set of the first intelligent model based on capability information of the terminal and/or based on environment data (such as channel data) between the access network node and the terminal. Alternatively, the access network node may obtain the training policy and/or the model structure of the first intelligent model from a third-party node in the network, and then forward the training policy and/or the model structure to the terminal. In other words, the information (including but not limited to the first information, the second information, and the third information) sent by the access network node to the terminal may be generated by the access network node, or may be obtained by the access network node from the third-party node and then forwarded to the terminal. For example, the third-party node may be a node that has an AI function or is configured with an AI entity in the network. For example, the third-party node may be a non-real-time RIC, the non-real-time RIC may be included in an OAM, and the third-party node may actually be the OAM. Optionally, the access network node receives the capability information from the terminal, where the capability information indicates a capability of the terminal to run an intelligent model.

By way of example and not limitation, the capability information specifically indicates one or more of the following capabilities of the terminal:

whether to support running of the intelligent model, a data processing capability, a storage capability, a type of the intelligent model that can be run, power consumption of a processor, or a battery capacity.

For example, the capability information may indicate whether the terminal supports running of the intelligent model. After receiving the capability information, if the access network node determines, based on the capability information, that the terminal supports the intelligent model, the access network node sends the first information to the terminal, to notify the terminal of the policy for training the first intelligent model.

For another example, the access network node needs to notify the terminal of the structure of the first intelligent model by using the second information. The capability information may indicate operator library information of a machine learning model supported by the terminal. The operator library information may indicate a set of basic intelligent model operation units that can be supported by the terminal, or the operator library information may indicate a basic intelligent model operation unit that is not supported by the terminal. The access network node may learn of, based on the capability information, the operator library information of the model supported by the terminal, to determine the structure of the first intelligent model.

For example, the intelligent model operation unit may include but is not limited to one or more of the following: a one-dimensional CNN unit (conv1d), a two-dimensional CNN unit (conv2d), a three-dimensional CNN unit (conv3d), a pooling (pooling) layer, a pooling operation, or a sigmoid (sigmoid) activation function.

For another example, the capability information indicates the data processing capability of the terminal. For example, the capability information may indicate a type of the processor, an operation speed of the processor, an amount of data that can be processed by the processor, and the like. For example, the type of the processor may include a type of a graphics processing unit (graphics processing unit, GPU) and/or a type of a central processing unit (central processing unit, CPU). The access network node may determine one or more of the training policy, the model structure, or the training data set of the first intelligent model based on the data processing capability of the terminal.

In an implementation, the access network node may obtain through training, based on the capability information of the terminal and/or based on the environment data (such as the channel data) between the access network node and the terminal, an intelligent model that meets a terminal capability and/or a channel condition. The access network node notifies the terminal of the training policy for training the intelligent model, so that the terminal trains the first intelligent model by using the training policy, and the first intelligent model obtained through training by the terminal is as same as the intelligent model obtained through training by the access network node as possible. In this way, the first intelligent model applied by the terminal in a process of communication with the access network node can match the intelligent model used by the access network node, thereby improving communication performance.

For example, the first intelligent model is a compression encoding model, and the access network node may obtain through training, based on the capability information of the terminal and the channel data, a compression decoding model used by the access network node and the compression encoding model used by the terminal that match each other. The access network node notifies the terminal of the training policy used by the access network node to train the compression encoding model. For example, the access network node notifies the terminal that the initialization manner used by the access network node is that a value is randomly selected in the range $[z_{min}, z_{max}]$ as the weight of the neuron, the model training manner is the manner of supervised learning, the loss function is the cross entropy loss function, and the optimization algorithm is the stochastic gradient descent algorithm. After obtaining the training policy of the access network node, the terminal trains the compression encoding model according to the training policy, so that a compression encoding model obtained through training by the terminal is as same as the compression encoding model obtained through training by the access network node as possible. In this way, the compression encoding model used by the terminal in communication matches the compression decoding model used by the access network node in communication.

Optionally, the access network node may further notify the terminal of a structure of the intelligent model as the structure of the first intelligent model, and/or the access network node may further indicate, to the terminal, the information about the training data set used by the access network node to train the intelligent model.

In another implementation, the third-party node in the network may obtain the capability information of the terminal from the access network node, and/or obtain the environment data between the access network node and the terminal, and obtain, through training, based on the obtained information, the intelligent model applied by the access network node and the intelligent model applied by the terminal that match each other. The third-party node sends the intelligent model applied by the access network node to the access network node, and notifies the access network node of the training policy used by the terminal to train the intelligent model, and then the access network node forwards the training policy to the terminal by using the first information. Optionally, the third-party node may further notify the terminal of the structure of the intelligent model and/or the information about the training data set by using the access network node.

S402: The terminal performs model training on the first intelligent model according to the training policy.

The terminal may determine the training policy of the first intelligent model, for example, the model training manner, the loss function, the model initialization manner, the model optimization algorithm type, and the optimization algorithm parameter. Apart or all of the training policies may be determined by the terminal based on the first information from the access network node. The training policy that is not indicated by the access network node may be obtained by the terminal based on preconfigured information or an associated training policy indicated by the access network node.

Optionally, the terminal may obtain the structure of the first intelligent model, and determine the first intelligent model based on the structure.

In an implementation, the terminal may receive the second information from the access network node, where the second information indicates the structure of the first intelligent model, and the terminal determines the initial first intelligent model (or referred to as the first intelligent model before training) based on the second information.

For a specific implementation in which the terminal obtains the initial first intelligent model based on the second information, refer to the foregoing descriptions. For brevity, details are not described herein again.

In another implementation, the terminal obtains the structure of the first intelligent model from the preconfigured information, and determines the initial first intelligent model. Optionally, the terminal may receive the third information from the access network node, where the third information indicates the information about the training data set.

The terminal obtains the training data set based on the third information, and performs model training on the first intelligent model based on the training data set by using the training policy indicated by the first information. However, the present disclosure is not limited thereto. The terminal may further perform model training on the first intelligent model based on a data set stored in the terminal.

After obtaining the training policy of the first intelligent model and the training data set, and obtaining the initial first intelligent model based on the structure of the first intelligent model, the terminal may start to perform model training on the first intelligent model.

For example, the terminal determines, according to the training policy, that the model training manner is the manner of supervised learning, and the training data set includes the training sample and the label. The terminal inputs the training sample into the first intelligent model in each training. The first intelligent model processes the training sample and then outputs the inference result. The terminal obtains, based on the inference result and the label by using the loss function, a loss value output by the loss function. Then, a parameter of the first intelligent model is optimized based on the loss value by using the model optimization algorithm, to obtain a first intelligent model whose parameter is updated. The first intelligent model whose parameter is updated is applied to next model training. After a plurality of times of iterative training, when the loss value output by the loss function is less than or equal to the first threshold, the terminal determines that the training of the first intelligent model is completed, and the trained first intelligent model is obtained.

For another example, the terminal determines, according to the training policy, that the model training manner is the manner of unsupervised learning, and the training data set includes the training sample. The terminal inputs the training sample into the first intelligent model in each training. The first intelligent model processes the training sample and then outputs the inference result. The terminal obtains an output value of the loss function based on the inference result by using the loss function. Then, a parameter of the first intelligent model is optimized based on the output value of the loss function by using the model optimization algorithm, to obtain a first intelligent model whose parameter is updated. The first intelligent model whose parameter is updated is applied to next model training. After a plurality of times of iterative training, when the output value of the loss function is greater than or equal to the second threshold, the terminal determines that the training of the first intelligent model is completed, and the trained first intelligent model is obtained. Based on the foregoing solution, the network may notify the terminal of the training policy of the intelligent model, and the terminal trains the intelligent model according to the training policy provided by the network, so that a model obtained through training by the terminal can match a model used by the network, thereby meeting an expected performance requirement. This reduces air interface resource overheads incurred when the access network node sends a model parameter (for example, a weight of each neuron, an activation function, and an offset) of the first intelligent model to the terminal.

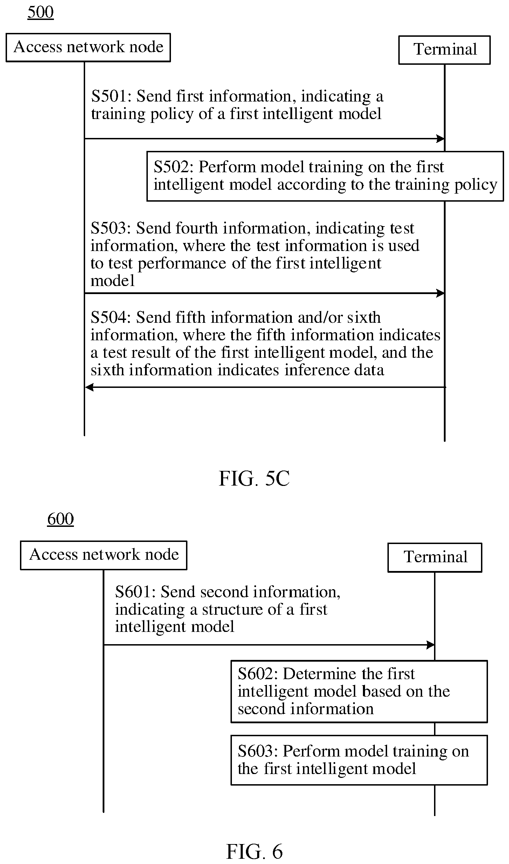

FIG. 5C is a schematic flowchart of a communication method 500 according to the present disclosure. It should be noted that, for a part that is in the method shown in FIG. 5C and that is the same as that in the method shown in FIG. 4, refer to the descriptions in the method shown in FIG. 4. For brevity, details are not described herein again.

S501: An access network node sends first information to a terminal, where the first information indicates a training policy of a first intelligent model.

For a specific implementation, refer to S401. Details are not described herein again.

S502: The terminal trains the first intelligent model according to the training policy.

The terminal may obtain a structure of the first intelligent model, determine the first intelligent model, and train the first intelligent model by using a training data set and the training policy. For a specific implementation, refer to S402. Details are not described herein again.

S503: The access network node sends fourth information to the terminal, where the fourth information indicates test information, and the test information is used to test performance of the first intelligent model.

Correspondingly, the terminal receives the fourth information from the access network node. After receiving the fourth information, the terminal tests a trained first intelligent model based on the fourth information.

By way of example and not limitation, the test information includes one or more of the following: test data information, a performance evaluation manner, or a performance evaluation parameter.

Optionally, when the test information includes one or two of the test data information, the performance evaluation manner, and the performance evaluation parameter, for example, includes the test data information and the performance evaluation manner, the remaining item that is not included, for example, the performance evaluation parameter, may be agreed on in a protocol, or determined in another manner. This is not limited. Alternatively, in the following example, the terminal does not need to learn of the performance evaluation manner and/or the performance evaluation parameter, and the access network node performs performance evaluation.

The test data information indicates one or more of test data, a type of the test data, label data, or a type of the label data. The performance evaluation manner may be a manner of calculating a loss value between inference data and the label data. The performance evaluation parameter may be a threshold for evaluating the loss value, or another parameter. However, the present disclosure is not limited thereto. The performance evaluation manner may alternatively be an evaluation function or the like.

S504: The terminal sends fifth information and/or sixth information to the access network node, where the fifth information indicates a test result of the first intelligent model, and the sixth information indicates the inference data.

The inference data is obtained by inferring test data by the first intelligent model, and the test information indicated by the fourth information includes the test data.

In an implementation, the terminal may send the fifth information to the access network node, where the fifth information may indicate the test result of the first intelligent model.

For example, the test result may be that the performance of the first intelligent model meets or does not meet a requirement. The test information sent by the access network node to the terminal may include the test data, check data, and a check threshold. The terminal may use the test data as an input of the trained first intelligent model, to obtain the inference data obtained by inferring the test data by the first intelligent model. The terminal calculates a loss value between the inference data and the check data. For example, the terminal may obtain the loss value between the inference data and the check data through calculation by using a loss function used when the first intelligent model is trained. However, this application is not limited thereto. The terminal compares the loss value with the check threshold. If the loss value is less than or equal to the check threshold, the terminal may determine that the trained first intelligent model meets the requirement, and may be applied to actual communication, and then notify the access network node by using the fifth information. Alternatively, if the loss value is greater than the check threshold, the terminal may notify, by using the fifth information, the access network node that the trained first intelligent model does not meet the requirement.

For another example, the test result may be a loss value between the inference data and check data. For example, in addition to indicating the test data and the check data by the access network node by using the fourth information, the fourth information further indicates that the performance evaluation manner is calculation of the loss value between the inference data and the check data. The terminal obtains the inference data through inference by using the trained first intelligent model based on the test data indicated by the fourth information, calculates the loss value between the inference data and the label data, and notifies the access network node of the loss value by using the fifth information. A network determines, based on the loss value, whether performance of the first intelligent model obtained through training by the terminal meets a requirement. For example, the access network node or a third-party node in the network may determine whether the performance meets the requirement, and the third-party node may obtain the loss value through forwarding by the access network node.

In another implementation, the terminal may send the sixth information to the access network node, where the sixth information indicates the inference data of the first intelligent model.

For example, the fourth information indicates the test data, the terminal infers the test data by using the trained first intelligent model, to obtain the inference data output by the first intelligent model, and the terminal sends the obtained inference data to the access network node. A network node (for example, an access network node or a third-party node in the network) determines, based on the inference data, whether performance of the trained first intelligent model meets a requirement.

In another implementation, the terminal may send the fifth information and the sixth information to the access network node.

In other words, the terminal sends the test result to the access network node, and sends the inference data to the access network node. The access network node may determine, with reference to the test result and the inference data, whether to use the first intelligent model obtained through training by the terminal in actual communication. However, the present disclosure is not limited thereto.

Optionally, the access network node sends seventh information to the terminal, where the seventh information indicates an updated training policy of the first intelligent model, and/or indicates an updated structure of the first intelligent model.

Correspondingly, the terminal receives the seventh information from the access network node. The terminal trains the first intelligent model again based on the seventh information.

In an implementation, after receiving the fifth information and/or the sixth information from the terminal, the access network node determines that the performance of the first intelligent model obtained through training by the terminal does not meet the requirement. In this case, the access network node may send the seventh information to the terminal, to notify the terminal of the updated training policy of the first intelligent model and/or the updated structure of the first intelligent model.

In another implementation, when the terminal uses the trained first intelligent model for communication, the access network node determines, based on communication performance, that the first intelligent model needs to be updated, and the access network node may send the seventh information to the terminal.

For example, after the terminal applies the model for a period of time, a situation may occur, for example, a channel environment changes, so that the performance of the first intelligent model no longer meets the requirement. The access network node may send the seventh information to the terminal, and then the terminal performs model training on the first intelligent model again, so that a first intelligent model obtained through the retraining is adapted to a changed environment.

A manner in which the seventh information indicates the training policy may be the same as a manner in which the first information indicates the training policy, and a manner in which the seventh information indicates the model structure may be the same as a manner in which second information indicates the model structure. Alternatively, the seventh information may specifically indicate at least one variation of the training policy and/or at least one variation of the structure of the first intelligent model.

For example, the seventh information indicates the at least one variation of the training policy. After receiving the seventh information, the terminal determines the updated training policy based on the variation indicated by the seventh information. For example, the access network node adjusts an optimization algorithm parameter (for example, a learning rate changes from 0.1 indicated by the first information to 0.01), and among training policies, only the optimization algorithm parameter changes, and the remaining training policies do not change. In this case, the seventh information may indicate that an updated learning rate is 0.01. For another example, the first information indicates that an amount of data processed in batches is N, in other words, N pieces of training data are selected each time for gradient descent updating, and the access network node adjusts the amount of data processed in batches to M. In this case, the access network node may indicate, by using the seventh information, that the amount of data processed in batches is adjusted to M, or the seventh information may indicate that the amount of data processed in batches increases by Q, where Q=M-N. After receiving the seventh information, the terminal increases the amount of data processed in batches by Q to N+Q, so that M pieces of training data are selected each time for gradient descent updating. However, the present disclosure is not limited thereto.

Additionally/alternatively, the seventh information may indicate the at least one variation of the model structure. A specific manner is similar to a manner of indicating the at least one variation of the training policy. For implementation, refer to the foregoing descriptions. Details are not described herein again.

Based on the foregoing solution, after the terminal performs model training according to the training policy indicated by the access network node, the access network node may send the test information to the terminal, the terminal tests the trained first intelligent model based on the test information, and the terminal or the access network node may determine, based on the test result and/or the inference data, whether the performance of the trained first intelligent model meets the requirement. When the performance meets the requirement, the first intelligent model can be applied to actual communication, to achieve a purpose of improving wireless communication performance (for example, communication reliability).

FIG. 6 is another schematic flowchart of a communication method according to the present disclosure. It should be noted that a part in the method shown in FIG. 6 and a same part in another method may be mutually referenced or implemented in combination. For brevity, details are not described herein again.

S601: An access network node sends second information to a terminal, where the second information indicates a structure of a first intelligent model, and the second information includes one or more of the following structure information of the first intelligent model: network layer structure information, a dimension of input data, or a dimension of output data.

Correspondingly, the terminal receives the second information from the access network node.

The network layer structure information of the first intelligent model may include but is not limited to one or more of the following:

A quantity of neural network layers included in the first intelligent model, a type of the neural network layer, a manner of using the neural network layer, a cascading relationship between the neural network layers, a dimension of input data of the neural network layer, or a dimension of output data of the neural network layer.

S602: The terminal determines the first intelligent model based on the second information.

After receiving the second information, the terminal may generate, based on the structure of the first intelligent model indicated by the second information, the first intelligent model having the structure.

S603: The terminal performs model training on the first intelligent model.

After determining the first intelligent model in S602, the terminal trains the first intelligent model.

Based on the foregoing solution, the access network node notifies the terminal of the structure of the first intelligent model, and the terminal generates, based on an indication of the access network node, the first intelligent model having the structure, so that the structure of the first intelligent model used by the terminal can meet a requirement of the access network node. In this way, the first intelligent model can be used to improve wireless communication performance. After training the first intelligent model, the terminal may apply the first intelligent model to communication. This can reduce air interface resource overheads incurred when the access network node notifies the terminal of a model parameter (for example, a weight of each neuron, an activation function, and an offset) of the first intelligent model.

The terminal may train the first intelligent model by using a predefined training policy that is agreed upon by the terminal and the access network node, or the access network node may notify the terminal of a training policy of the first intelligent model by using first information.

A training data set used by the terminal to train the first intelligent model may be prestored by the terminal or received from the access network node.

The foregoing describes in detail the methods provided in the present disclosure with reference to FIG. 4 to FIG. 6. The following accompanying drawings describe a communication apparatus and a communication device provided in the present disclosure. To implement the foregoing functions in the methods provided in the present disclosure, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on a specific application and a design constraint of the technical solutions.

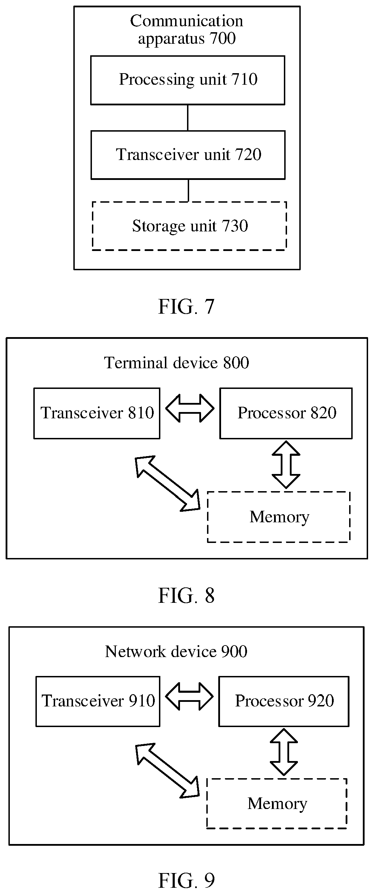

FIG. 7 is a schematic block diagram of a communication apparatus according to the present disclosure. As shown in FIG. 7, a communication apparatus 700 may include a transceiver unit 720.

In a possible design, the communication apparatus 700 may correspond to the terminal device in the foregoing method, or a chip disposed (or used) in the terminal device, or another apparatus, module, circuit, unit, or the like that can implement a method performed by the terminal device.

It should be understood that the communication apparatus 700 may include units configured to perform the methods performed by the terminal device in the methods shown in FIG. 4, FIG. 5C, and FIG. 6. In addition, the units in the communication apparatus 700 and the foregoing other operations and/or functions are respectively intended to implement corresponding processes of the methods shown in FIG. 4, FIG. 5C, and FIG. 6.

Optionally, the communication apparatus 700 may further include a processing unit 710. The processing unit 710 may be configured to process instructions or data, to implement a corresponding operation.

It should be further understood that when the communication apparatus 700 is the chip disposed (or used) in the terminal device, the transceiver unit 720 in the communication apparatus 700 may be an input/output interface or a circuit in the chip, and the processing unit 710 in the communication apparatus 700 may be a processor in the chip.

Optionally, the communication apparatus 700 may further include a storage unit 730. The storage unit 730 may be configured to store instructions or data. The processing unit 710 may execute the instructions or the data stored in the storage unit, to enable the communication apparatus to implement a corresponding operation.

It should be understood that the transceiver unit 720 in the communication apparatus 700 may be implemented through a communication interface (for example, a transceiver or an input/output interface), for example, may correspond to a transceiver 810 in a terminal device 800 shown in FIG. 8. The processing unit 710 in the communication apparatus 700 may be implemented by using at least one processor, for example, may correspond to a processor 820 in the terminal device 800 shown in FIG. 8. Alternatively, the processing unit 710 in the communication apparatus 700 may be implemented by using at least one logic circuit. The storage unit 730 in the communication apparatus 700 may correspond to a memory in the terminal device 800 shown in FIG. 8.

It should be further understood that a specific process in which the units perform the foregoing corresponding steps is described in detail in the foregoing methods. For brevity, details are not described herein again.

In another possible design, the communication apparatus 700 may correspond to the access network node in the foregoing methods, or a chip disposed (or used) in the access network node, or another apparatus, module, circuit, unit, or the like that can implement a method performed by the access network node.

It should be understood that the communication apparatus 700 may include units configured to perform the methods performed by the access network node in the methods shown in FIG. 4, FIG. 5C, and FIG. 6. In addition, the units in the communication apparatus 700 and the foregoing other operations and/or functions are respectively intended to implement corresponding processes of the methods shown in FIG. 4, FIG. 5C, and FIG. 6.

Optionally, the communication apparatus 700 may further include a processing unit 710. The processing unit 710 may be configured to process instructions or data, to implement a corresponding operation.

It should be further understood that when the communication apparatus 700 is the chip disposed (or used) in the access network node, the transceiver unit 720 in the communication apparatus 700 may be an input/output interface or a circuit in the chip, and the processing unit 710 in the communication apparatus 700 may be a processor in the chip.

Optionally, the communication apparatus 700 may further include a storage unit 730. The storage unit 730 may be configured to store instructions or data. The processing unit 710 may execute the instructions or the data stored in the storage unit, to enable the communication apparatus to implement a corresponding operation.

It should be understood that when the communication apparatus 700 is the access network node, the transceiver unit 720 in the communication apparatus 700 may be implemented through a communication interface (for example, a transceiver or an input/output interface), for example, may correspond to a transceiver 910 in a network device 900 shown in FIG. 9. The processing unit 710 in the communication apparatus 700 may be implemented by using at least one processor, for example, may correspond to a processor 920 in the network device 900 shown in FIG. 9. Alternatively, the processing unit 710 in the communication apparatus 700 may be implemented by using at least one logic circuit. The storage unit 730 in the communication apparatus 700 may correspond to a memory in the network device 900 shown in FIG. 9.

It should be further understood that a specific process in which the units perform the foregoing corresponding steps is described in detail in the foregoing methods. For brevity, details are not described herein again.

FIG. 8 is a diagram of a structure of a terminal device 800 according to the present disclosure. The terminal device 800 may be used in the system shown in FIG. 1, to perform functions of the terminal device in the foregoing methods. As shown in the figure, the terminal device 800 includes a processor 820 and a transceiver 810. Optionally, the terminal device 800 further includes a memory. The processor 820, the transceiver 810, and the memory may communicate with each other through an internal connection path, to perform transmission of a control signal and/or a data signal. The memory is configured to store a computer program, and the processor 820 is configured to execute the computer program in the memory, to control the transceiver 810 to receive and send a signal.

The processor 820 may be configured to perform an action that is implemented inside the terminal device and that is described in the foregoing methods. The transceiver 810 may be configured to perform an action that is of sending or receiving by the terminal device to or from the network device and that is described in the foregoing methods. For details, refer to the descriptions in the foregoing methods. Details are not described herein again.

Optionally, the terminal device 800 may further include a power supply, configured to supply power to various components or circuits in the terminal device.

FIG. 9 is a diagram of a structure of a network device 900 according to the present disclosure. The network device 900 may be used in the system shown in FIG. 1, to perform functions of the network device in the foregoing methods. As shown in the figure, the network device 900 includes a processor 920 and a transceiver 910. Optionally, the network device 900 further includes a memory. The processor 920, the transceiver 910, and the memory may communicate with each other through an internal connection path, to perform transmission of a control signal and/or a data signal. The memory is configured to store a computer program, and the processor 920 is configured to execute the computer program in the memory, to control the transceiver 910 to receive and send a signal.

The processor 920 may be configured to perform an action that is implemented inside the network device and that is described in the foregoing methods. The transceiver 910 may be configured to perform an action that is of sending or receiving by the network device to or from the terminal and that is described in the foregoing methods. For details, refer to the descriptions in the foregoing methods. Details are not described herein again.

Optionally, the network device 900 may further include a power supply, configured to supply power to various components or circuits in the network device.

In the terminal device shown in FIG. 8 and the network device shown in FIG. 9, the processor and the memory may be combined into one processing apparatus, and the processor is configured to execute program code stored in the memory to implement the foregoing functions. During specific implementation, the memory may be integrated into the processor, or independent of the processor. The processor may correspond to the processing unit in FIG. 7. The transceiver may correspond to the transceiver unit in FIG. 7. The transceiver 810 may include a receiver (or referred to as a receiving machine or a receiving circuit) and a transmitter (or referred to as a transmitting machine or a transmitting circuit). The receiver is configured to receive a signal, and the transmitter is configured to transmit a signal.

In the present disclosure, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams in the present disclosure. The general-purpose processor may be a microprocessor, any conventional processor, or the like. The steps of the methods in the present disclosure may be directly performed by a hardware processor, or may be performed by a combination of hardware in the processor and a software module.

In the present disclosure, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. Alternatively, the memory in this application may be a circuit or any other apparatus that can implement a storage function, and is configured to store program instructions and/or data.

The present disclosure further provides a processing apparatus, including a processor and a (communication) interface. The processor is configured to perform the method according to any one of the foregoing methods.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (microcontroller unit, MCU), a programmable logic device (programmable logic device, PLD), or another integrated chip.

According to the methods provided in the present disclosure, the present disclosure further provides a computer program product. The computer program product includes computer program code. When the computer program code is executed by one or more processors, an apparatus including the processor is enabled to perform the methods shown in FIG. 4, FIG. 5C, and FIG. 6.

The technical solutions provided in the present disclosure may be wholly or partially implemented by using software, hardware, firmware, or any combination thereof. When the software is used to implement the technical solutions, the technical solutions may be wholly or partially implemented in a form of a computer program product. The computer program product includes one or more computer instructions. When the computer program instructions are loaded and executed on a computer, the processes or functions according to the present invention are wholly or partially generated. The computer instructions may be stored in a computer-readable storage medium, or may be transmitted from one computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the methods provided in the present disclosure, the present disclosure further provides a computer-readable storage medium. The computer-readable storage medium stores program code. When the program code is run by one or more processors, an apparatus including the processor is enabled to perform the methods shown in FIG. 4, FIG. 5C, and FIG. 6.

According to the methods provided in the present disclosure, the present disclosure further provides a system, including the foregoing one or more apparatuses.

In the several embodiments provided in the present disclosure, it should be understood that the disclosed system, apparatus, and method may be implemented in another manner. For example, the described apparatus is merely an example. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A communication method, comprising:

   receiving first information, wherein the first information indicates a training policy of a first intelligent model; and
   performing model training on the first intelligent model according to the training policy.

2. The method according to claim 1, wherein the training policy comprises one or more of the following:
   a model training manner, loss function information, a model initialization manner, a model optimization algorithm type, or an optimization algorithm parameter.

3. The method according to claim 2, wherein the model optimization algorithm is an adaptive momentum estimation algorithm, a stochastic gradient descent algorithm, or a batch gradient descent algorithm; and/or
   the optimization algorithm parameter comprises one or more of a learning rate, a quantity of iterations, or an amount of data processed in batches.

4. The method according to any one of claims 1 to 3, wherein the method further comprises:
   obtaining second information, wherein the second information indicates a structure of the first intelligent model.

5. The method according to claim 4, wherein the second information specifically indicates one or more of the following structure information of the first intelligent model:
   network layer structure information, a dimension of input data, or a dimension of output data.

6. The method according to claim 5, wherein the network layer structure information comprises one or more of the following:
   a quantity of neural network layers comprised in the first intelligent model, a type of the neural network layer, a manner of using the neural network layer, a cascading relationship between the neural network layers, a dimension of input data of the neural network layer, or a dimension of output data of the neural network layer.

7. The method according to any one of claims 1 to 6, wherein the method further comprises:
   receiving third information, wherein the third information indicates information about a training data set, and the training data set is used to train the first intelligent model.

8. The method according to claim 7, wherein the training data set comprises a training sample, or comprises a training sample and a label.

9. The method according to any one of claims 1 to 8, wherein the method further comprises:
sending capability information, wherein the capability information indicates a capability to run an intelligent model.

10. The method according to claim 9, wherein the capability information specifically indicates one or more of the following capabilities:
whether to support running of the intelligent model, a type of the intelligent model that can be run, a data processing capability, or a storage capability.

11. The method according to any one of claims 1 to 10, wherein the method further comprises:
receiving fourth information, wherein the fourth information indicates test information, and the test information is used to test performance of the first intelligent model.

12. The method according to claim 11, wherein the test information comprises one or more of the following:
test data information, a performance evaluation manner, or a performance evaluation parameter.

13. The method according to claim 11 or 12, wherein the method further comprises:

sending fifth information, wherein the fifth information indicates a test result of the first intelligent model; and/or
sending sixth information, wherein the sixth information indicates inference data, the inference data is obtained by inferring test data for the first intelligent model, and the test information comprises the test data.

14. The method according to claim 13, wherein the method further comprises:
receiving seventh information, wherein the seventh information indicates an updated training policy of the first intelligent model, and/or indicates an updated structure of the first intelligent model.

15. The method according to claim 14, wherein the seventh information specifically indicates at least one variation of the training policy and/or at least one variation of the structure of the first intelligent model.

16. A communication method, comprising:
sending first information, wherein the first information indicates a training policy of a first intelligent model.

17. The method according to claim 16, wherein the training policy comprises one or more of the following:
a model training manner, loss function information, a model initialization manner, a model optimization algorithm type, or an optimization algorithm parameter.

18. The method according to claim 17, wherein the model optimization algorithm type is an adaptive momentum estimation algorithm, a stochastic gradient descent algorithm, or a batch gradient descent algorithm; and/or
the optimization algorithm parameter comprises one or more of a learning rate, a quantity of iterations, or an amount of data processed in batches.

19. The method according to any one of claims 16 to 18, wherein the method further comprises:
sending second information, wherein the second information indicates a structure of the first intelligent model.

20. The method according to claim 19, wherein the second information specifically indicates one or more of the following structure information of the first intelligent model:
network layer structure information, a dimension of input data, or a dimension of output data.

21. The method according to claim 20, wherein the network layer structure information comprises one or more of the following:
a quantity of neural network layers comprised in the first intelligent model, a type of the neural network layer, a manner of using the neural network layer, a cascading relationship between the neural network layers, a dimension of input data of the neural network layer, or a dimension of output data of the neural network layer.

**22.** The method according to any one of claims 16 to 21, wherein the method further comprises:
sending third information, wherein the third information indicates information about a training data set, and the training data set is used to train the first intelligent model.

**23.** The method according to claim 22, wherein the training data set comprises a training sample, or comprises a training sample and a label.

**24.** The method according to any one of claims 16 to 23, wherein the method further comprises:
receiving capability information, wherein the capability information indicates a capability to run an intelligent model.

**25.** The method according to claim 24, wherein the capability information indicates one or more of the following capabilities:
whether to support running of the intelligent model, a type of the intelligent model that can be run, a data processing capability, or a storage capability.

**26.** The method according to any one of claims 16 to 25, wherein the method further comprises:
sending fourth information, wherein the fourth information indicates test information for testing performance of the first intelligent model.

**27.** The method according to claim 26, wherein the test information comprises one or more of the following:
test data information, a performance evaluation manner, or a performance evaluation parameter.

**28.** The method according to claim 26 or 27, wherein the method further comprises:

receiving fifth information, wherein the fifth information indicates a test result of the first intelligent model; and/or
receiving sixth information, wherein the sixth information indicates inference data, the inference data is obtained by inferring test data by the first intelligent model, and the test information comprises the test data.

**29.** The method according to claim 28, wherein the method further comprises:
sending seventh information, wherein the seventh information indicates an updated training policy of the first intelligent model, and/or indicates an updated structure of the first intelligent model.

**30.** The method according to claim 29, wherein the seventh information specifically indicates at least one parameter variation of the training policy and/or at least one parameter variation of the structure of the first intelligent model.

**31.** A communication method, comprising:

receiving second information, wherein the second information indicates a structure of a first intelligent model, and the second information comprises one or more of the following structure information of the first intelligent model: network layer structure information, a dimension of input data, or a dimension of output data;
determining the structure of the first intelligent model based on the second information; and
performing model training on the first intelligent model.

**32.** The method according to claim 31, wherein the method further comprises:

obtaining first information, wherein the first information indicates a training policy of the first intelligent model; and
the performing model training on the first intelligent model comprises:
performing model training on the first intelligent model according to the training policy.

**33.** The method according to claim 32, wherein the training policy comprises one or more of the following:
a model training manner, loss function information, a model initialization manner, a model optimization algorithm type, or an optimization algorithm parameter.

**34.** The method according to any one of claims 31 to 33, wherein the method further comprises:
receiving third information, wherein the third information indicates information about a training data set, and the training data set is used to train the first intelligent model.

**35.** The method according to claim 34, wherein the training data set comprises a training sample, or comprises a training sample and a label.

36. The method according to any one of claims 31 to 35, wherein the method further comprises:
sending capability information, wherein the capability information indicates a capability to run an intelligent model.

37. The method according to claim 36, wherein the capability information indicates one or more of the following capabilities:
whether to support running of the intelligent model, a type of the intelligent model that can be run, a data processing capability, or a storage capability.

38. The method according to any one of claims 31 to 37, wherein the method further comprises:
receiving fourth information, wherein the fourth information indicates test information, and the test information is used to test performance of the first intelligent model.

39. The method according to claim 38, wherein the test information comprises one or more of the following:
test data information, a performance evaluation manner, or a performance evaluation parameter.

40. The method according to claim 38 or 39, wherein the method further comprises:

sending fifth information, wherein the fifth information indicates a test result of the first intelligent model; and/or
sending sixth information, wherein the sixth information indicates inference data, the inference data is obtained by inferring test data by the first intelligent model, and the test information comprises the test data.

41. The method according to any one of claims 31 to 40, wherein the method further comprises:
receiving seventh information, wherein the seventh information indicates an updated training policy of the first intelligent model, and/or indicates an updated structure of the first intelligent model.

42. The method according to claim 41, wherein the seventh information specifically indicates at least one variation of the training policy and/or at least one variation of the structure of the first intelligent model.

43. A communication method, comprising:
sending second information, wherein the second information indicates a structure of a first intelligent model, and the second information comprises one or more of the following structure information of the first intelligent model: network layer structure information, a dimension of input data, or a dimension of output data.

44. The method according to claim 43, wherein the method further comprises:
sending first information, wherein the first information indicates a training policy of the first intelligent model.

45. The method according to claim 44, wherein the training policy comprises one or more of the following:
a model training manner, loss function information, a model initialization manner, a model optimization algorithm type, or an optimization algorithm parameter.

46. The method according to any one of claims 43 to 45, wherein the method further comprises:
sending third information, wherein the third information indicates information about a training data set, and the training data set is used to train the first intelligent model.

47. The method according to claim 46, wherein the training data set comprises a training sample, or comprises a training sample and a label.

48. The method according to any one of claims 43 to 47, wherein the method further comprises:
receiving capability information, wherein the capability information indicates a capability to run an intelligent model.

49. The method according to claim 43, wherein the capability information indicates one or more of the following capabilities:
whether to support running of the intelligent model, a type of the intelligent model that can be run, a data processing capability, or a storage capability.

50. The method according to any one of claims 43 to 49, wherein the method further comprises:

sending fourth information, wherein the fourth information indicates test information, and the test information is used to test performance of the first intelligent model.

51. The method according to claim 50, wherein the test information comprises one or more of the following: test data information, a performance evaluation manner, or a performance evaluation parameter.

52. The method according to claim 50 or 51, wherein the method further comprises:

receiving fifth information, wherein the fifth information indicates a test result of the first intelligent model; and/or receiving sixth information, wherein the sixth information indicates inference data, the inference data is obtained by inferring test data for the first intelligent model, and the test information comprises the test data.

53. The method according to any one of claims 43 to 52, wherein the method further comprises:
sending seventh information, wherein the seventh information indicates an updated training policy of the first intelligent model, and/or indicates an updated structure of the first intelligent model.

54. The method according to claim 53, wherein the seventh information specifically indicates at least one variation of the training policy and/or at least one variation of the structure of the first intelligent model.

55. A communication apparatus, configured to implement the method according to any one of claims 1 to 15 or claims 31 to 42.

56. A communication apparatus, comprising a processor and a memory, wherein the memory is coupled to the processor, and the processor is configured to perform the method according to any one of claims 1 to 15 or claims 31 to 42.

57. A communication apparatus, comprising a processor and a communication interface, wherein the processor performs the method according to any one of claims 1 to 15 or claims 31 to 42 through the communication interface.

58. A communication apparatus, configured to implement the method according to any one of claims 16 to 30 or claims 43 to 54.

59. A communication apparatus, comprising a processor and a memory, wherein the memory is coupled to the processor, and the processor is configured to perform the method according to any one of claims 16 to 30 or claims 43 to 54.

60. A communication apparatus, comprising a processor and a communication interface, wherein the processor performs the method according to any one of claims 16 to 30 or claims 43 to 54 through the communication interface.

61. A communication system, comprising the communication apparatus according to any one of claims 55 to 57 and the communication apparatus according to any one of claims 58 to 60.

62. A computer-readable storage medium, storing instructions, wherein when the instructions are run on a computer, the computer is enabled to perform the method according to any one of claims 1 to 54.

63. A computer program product, comprising instructions, wherein when the instructions are run on a computer, the computer is enabled to perform the method according to any one of claims 1 to 54.

FIG. 1

FIG. 2A

FIG. 2B

FIG. 2C

FIG. 2D

FIG. 2E

FIG. 2F

FIG. 3

400

```
┌─────────────────────┐                              ┌──────────┐
│ Access network node │                              │ Terminal │
└─────────────────────┘                              └──────────┘
```

S401: Send first information, indicating
a training policy of a first intelligent
model

S402: Perform model training on the
first intelligent model according to
the training policy

FIG. 4

◯ Neuron

FIG. 5A

◌ Neuron not engaged in training

◯ Neuron engaged in training

FIG. 5B

500

Access network node — Terminal

S501: Send first information, indicating a training policy of a first intelligent model

S502: Perform model training on the first intelligent model according to the training policy

S503: Send fourth information, indicating test information, where the test information is used to test performance of the first intelligent model

S504: Send fifth information and/or sixth information, where the fifth information indicates a test result of the first intelligent model, and the sixth information indicates inference data

FIG. 5C

600

Access network node — Terminal

S601: Send second information, indicating a structure of a first intelligent model

S602: Determine the first intelligent model based on the second information

S603: Perform model training on the first intelligent model

FIG. 6

Communication
apparatus 700

Processing unit 710

Transceiver unit 720

Storage unit 730

FIG. 7

Terminal device 800

Transceiver 810 ⟺ Processor 820

Memory

FIG. 8

Network device 900

Transceiver 910 ⟺ Processor 920

Memory

FIG. 9

## INTERNATIONAL SEARCH REPORT

| International application No. |
| --- |
| **PCT/CN2022/136138** |

**A.    CLASSIFICATION OF SUBJECT MATTER**

H04W24/02(2009.01)i;G06N3/08(2023.01)i

According to International Patent Classification (IPC) or to both national classification and IPC

**B.    FIELDS SEARCHED**

Minimum documentation searched (classification system followed by classification symbols)

IPC:H04W, H04Q7/-,H04B,G06N

Documentation searched other than minimum documentation to the extent that such documents are included in the fields searched

Electronic data base consulted during the international search (name of data base and, where practicable, search terms used)

3GPP, CJFD, CNABS, CNTXT, DWPI, ENTXT, VEN, WPABS, WPABSC: 策略, 传输, 次数, 迭代, 方式, 模式, 模型, 模型训练, 神经元网络, 损失函数, 梯度, 通信, 下降, 学习, 学习率, 训练, 训练策略, 优化算法, 指示, strategy, training, policy, transmission, gradient, neural, network, interation, indicat+

**C.    DOCUMENTS CONSIDERED TO BE RELEVANT**

| Category* | Citation of document, with indication, where appropriate, of the relevant passages | Relevant to claim No. |
| --- | --- | --- |
| PA | CN 114143799 A (HUAWEI TECHNOLOGIES CO., LTD.) 04 March 2022 (2022-03-04)<br>entire document | 1-63 |
| PA | CN 114036994 A (ZTE CORP.) 11 February 2022 (2022-02-11)<br>entire document | 1-63 |
| PA | CN 113938232 A (HUAWEI TECHNOLOGIES CO., LTD.) 14 January 2022 (2022-01-14)<br>entire document | 1-63 |
| A | CN 113412494 A (HUAWEI TECHNOLOGIES CO., LTD.) 17 September 2021 (2021-09-17)<br>abstract, and claims 1-23 | 1-63 |
| A | CN 111612153 A (HUAWEI TECHNOLOGIES CO., LTD.) 01 September 2020 (2020-09-01)<br>entire document | 1-63 |
| A | CN 112101551 A (BEIJING BAIDU NETCOM SCIENCE AND TECHNOLOGY CO., LTD.) 18 December 2020 (2020-12-18)<br>entire document | 1-63 |

☑ Further documents are listed in the continuation of Box C.          ☑ See patent family annex.

| | |
| --- | --- |
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **15 February 2023** | **16 February 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/136138**

### C.    DOCUMENTS CONSIDERED TO BE RELEVANT

| Category* | Citation of document, with indication, where appropriate, of the relevant passages | Relevant to claim No. |
|---|---|---|
| A | CN 113128686 A (HUAWEI TECHNOLOGIES CO., LTD.) 16 July 2021 (2021-07-16) entire document | 1-63 |
| PA | CN 114936117 A (HUAWEI TECHNOLOGIES CO., LTD.) 23 August 2022 (2022-08-23) entire document | 1-63 |
| PA | CN 114679355 A (HUAWEI TECHNOLOGIES CO., LTD.) 28 June 2022 (2022-06-28) entire document | 1-63 |
| PA | CN 114793453 A (BEIJING XIAOMI MOBILE SOFTWARE CO., LTD. et al.) 26 July 2022 (2022-07-26) entire document | 1-63 |

Form PCT/ISA/210 (second sheet) (July 2022)

**INTERNATIONAL SEARCH REPORT**
Information on patent family members

| International application No. |
|---|
| **PCT/CN2022/136138** |

| Patent document cited in search report | | | Publication date (day/month/year) | Patent family member(s) | | | Publication date (day/month/year) |
|---|---|---|---|---|---|---|---|
| CN | 114143799 | A | 04 March 2022 | None | | | |
| CN | 114036994 | A | 11 February 2022 | WO | 2022017231 | A1 | 27 January 2022 |
| CN | 113938232 | A | 14 January 2022 | WO | 2022012257 | A1 | 20 January 2022 |
| CN | 113412494 | A | 17 September 2021 | WO | 2020172825 | A1 | 03 September 2020 |
| CN | 111612153 | A | 01 September 2020 | WO | 2020168761 | A1 | 27 August 2020 |
| CN | 112101551 | A | 18 December 2020 | None | | | |
| CN | 113128686 | A | 16 July 2021 | WO | 2021143155 | A1 | 22 July 2021 |
| | | | | EP | 4080419 | A1 | 26 October 2022 |
| CN | 114936117 | A | 23 August 2022 | None | | | |
| CN | 114679355 | A | 28 June 2022 | WO | 2022135446 | A1 | 30 June 2022 |
| CN | 114793453 | A | 26 July 2022 | WO | 2022104799 | A1 | 27 May 2022 |

Form PCT/ISA/210 (patent family annex) (July 2022)

**EP 4 429 309 A1**

## REFERENCES CITED IN THE DESCRIPTION

### Patent documents cited in the description

- CN 202111462667X